# EUROPÄISCHE PATENTSCHRIFT

(11) **EP 3 857 317 B1**
(45) Veröffentlichungstag und Bekanntmachung des Hinweises auf die Patenterteilung: **13.03.2024**
(21) Anmeldenummer: 19782510.2
(22) Anmeldetag: 25.09.2019
(51) Int. Cl.: G05B 19/042, A23L 3/00, G05B 13/02

(54) **VERFAHREN ZUR KONTINUIERLICHEN HERSTELLUNG NICHT-THERMISCH KONSERVIERTER FLÜSSIGER PRODUKTE**
PROCESS FOR THE CONTINUOUS PRODUCTION OF NON-THERMALLY CONSERVED LIQUID PRODUCTS
PROCÉDÉ DE FABRICATION CONTINUE DE PRODUITS LIQUIDES CONSERVÉS NON THERMIQUEMENT

(30) Priorität: 28.09.2018 DE 102018216815
(43) Veröffentlichungstag der Anmeldung: 04.08.2021
(73) Patentinhaber: Fraunhofer-Gesellschaft zur Förderung der angewandten Forschung e.V., 80686 München (DE)
(72) Erfinder: VASQUEZ-CAICEDO, Ana Lucia, 70569 Stuttgart (DE); VARONA IGLEISIAS, Salima, 70569 Stuttgart (DE)
(74) Vertreter: Schrell, Andreas
(86) Internationale Anmeldenummer: PCT/EP2019/075921
(87) Internationale Veröffentlichungsnummer: WO 2020/064867

(56) Entgegenhaltungen:
- EP-A1- 1 880 258
- WO-A1-2017/124106
- WO-A1-2018/018089
- DE-A1- 10 343 511
- DE-A1-102016 112 121
- US-A1- 2012 308 988

## Beschreibung

Die vorliegende Erfindung betrifft ein Verfahren zur kontinuierlichen Herstellung, vorzugsweise nicht-thermisch, konservierter flüssiger Produkte, eine Vorrichtung zur Durchführung dieses Verfahrens.

Eine besondere Herausforderung bei der Konservierung von Lebensmitteln in Zeiten wachsender Ansprüche an die Qualität und Haltbarkeit von Lebensmitteln ist eine möglichst geringe Beeinträchtigung der optischen und organoleptischen Eigenschaften des zu konservierenden Produktes bei gleichzeitig möglichst effizienter Inaktivierung von Mikroorganismen und dem Erhalt von ernährungsphysiologisch wertvollen Inhaltsstoffen. Weit verbreitete Verfahren zur Konservierung von Lebensmitteln auf Grundlage des Prinzips der Hitzeinaktivierung von Mikroorganismen, wie Hitzesterilisierung oder Pasteurisierung, führen dazu, dass neben den in dem zu konservierenden Produkt enthaltenen Mikroorganismen auch andere hitzeempfindliche Inhaltsstoffe des Produktes, wie Vitamine oder Proteine, zerstört werden, wodurch oftmals der Geschmack, das Aussehen und die ernährungsphysiologische Wertigkeit von auf diese Weise konservierten Produkten beeinträchtigt wird.

Die Entwicklung nicht-thermischer Verfahren zur Konservierung biogener Produkte zielt darauf ab, die gewünschten organoleptischen und optischen Eigenschaften der Produkte zu erhalten und Schäden an temperatursensitiven Inhaltsstoffen zu vermeiden. Insbesondere kann die Konservierung von flüssigen oder fließfähigen Produkten durch Aufschließen von mikrobiellen Zellen nach einer schnellen Dekompression eines unter Druck gelösten Gases erreicht werden.

Die industrielle Umsetzung dieser neuen Verfahren soll in kontinuierlichen Systemen erfolgen, wobei zum Etablieren eines effizienten Verfahrens noch einige Herausforderungen zu bewältigen sind. So ist oftmals die mikrobielle Belastung, insbesondere die Art und die Menge der in den zu konservierenden Produkten enthaltenen Mikroorganismen, unbekannt. Ein weiteres Problem liegt darin, dass die Zusammensetzung biogener Produkte einer natürlichen Variabilität unterliegt, sodass sich die physikalisch-chemischen Eigenschaften oftmals zumindest geringfügig unterscheiden, wodurch eine Standardisierung des Konservierungsverfahrens erschwert wird. Zu beachten ist ferner, dass die Konservierung und Stabilisierung von Produkten auch von der Inaktivierung von Enzymen und der Kontrolle des in der Prozessumgebung vorliegenden Sauerstoffs abhängt und eine genaue Kontrolle dieser Faktoren erforderlich ist, um unerwünschte physikalisch-chemische Reaktionen in den zu konservierenden Produkten zu vermeiden. Die Sammlung und Bestimmung von Daten zum Verständnis der mikrobiellen und enzymatischen Inaktivierungskinetik gestaltet sich gegenwärtig als langwierig und erfordert einen enormen Ressourcenaufwand.

In Bönsch et al., Chem. Eng. Technol., 2007, 30, No. 6, S. 755-757, wird die Anwendung eines Druckwechselverfahrens zur nicht-thermischen Inaktivierung von Mikroorganismen in flüssigen Lebensmitteln und Pharmazeutika gelehrt.

Die DE 103 43 511 A1 offenbart ein Verfahren zur schonenden Konservierung von Flüssigkeiten durch Anreichern einer zu konservierenden Flüssigkeit mit einem unter Druck stehenden Gas und anschließendes Entspannen der mit Gas angereicherten Flüssigkeit auf ein niedrigeres Druckniveau. Darin wird jedoch nicht beschrieben, wie eine Standardisierung des Verfahrens, das heißt eine reproduzierbare auf das konkrete Produkt und das zu erreichende Ergebnis gerichtete effiziente Konservierung, erzielt werden kann.

Das Dokument US 2012/308988 A1 betrifft ein Verfahren, gemäß dem in einem Nahrungsmittelherstellungsprozess Bakteriengehalte an verschiedenen Stellen des Prozesses ermittelt werden und diese ermittelten Gehalte verwendet werden, um mittels eines Vorhersagemodells die Entwicklung der Bakteriengehalte vorherzusagen und dementsprechend der Prozess angepasst werden kann.

Das Dokument WO 2018/018089 A1 betrifft ein Verfahren zur Gewinnung von Zucker und zur Verbesserung der Zentrifugation des Zuckers. Es offenbart ein Kontrollsystem, das zwei verschiedene Parameter erhält, einmal ein spezifisches Produktparameterset (first input) sowie ein Zielproduktparametersel (second input) und diese beiden Eingaben dazu verwendet werden, um einen Verfahrensparameter anzupassen, welcher für die Zentrifugation verwendet wird.

Es ist daher die Aufgabe der vorliegenden Erfindung, die vorgenannten Nachteile im Stand der Technik zu überwinden, insbesondere durch die Bereitstellung eines computerimplementierten Verfahrens zur kontinuierlichen Herstellung nicht-thermisch konservierter flüssiger Produkte. Die vorliegende Erfindung löst das ihr zu Grunde liegende Problem insbesondere durch die Gegenstände der unabhängigen Ansprüche.

Dabei betrifft die vorliegende Erfindung ein Verfahren zur kontinuierlichen Herstellung, vorzugsweise nicht-thermisch, konservierter flüssiger Produkte umfassend die Schritte:
a) Bereitstellen eines zu konservierenden flüssigen Produktes,
b) Bereitstellen einer Datenbank, umfassend eine Vielzahl von Standardproduktparametersets zu physikalisch-chemischen und mikrobiologischen Eigenschaften flüssiger Standardprodukte, wobei jeweils ein Standardproduktparameterset mit einem dazugehörigen vorbestimmten Standardverfahrensparameterset und einem Zielproduktparameterset verknüpft ist,
c) Bestimmen eines spezifischen Produktparametersets des bereitgestellten flüssigen Produktes durch Messen der physikalisch-chemischen und mikrobiologischen Eigenschaften des flüssigen Produktes bei einem ersten Druckniveau,
d) Zuordnen des in Schritt c) bestimmten spezifischen Produktparametersets zu einem in der gemäß Schritt b) bereitgestellten Datenbank enthaltenen Standardverfahrensparameterset,
e) Anwenden der Verfahrensparameter des in Schritt d) zugeordneten Standardverfahrensparametersets auf das bereitgestellte flüssige Produkt bei einem zweiten Druckniveau,
f) Bestimmen eines weiteren spezifischen Produktparametersets des in Schritt e) erhaltenen flüssigen Produktes durch Messen der physikalisch-chemischen und mikrobiologischen Eigenschaften des flüssigen Produktes bei dem ersten Druckniveau,
g) Vergleichen des in Schritt f) bestimmten weiteren spezifischen Produktparametersets mit dem Zielproduktparameterset, wobei bei deren Übereinstimmung das flüssige konservierte Produkt erhalten wird, wobei bei Nicht-Übereinstimmung des weiteren spezifischen Produktparametersets mit dem Zielproduktparameterset die Schritte d) bis g) wiederholt werden bis deren Übereinstimmung erreicht wird, und wobei jeweils in Schritt d) dem jeweils in Schritt f) bestimmten jeweils weiteren spezifischen Produktparameterset ein zugehöriges in der gemäß Schritt b) bereitgestellten Datenbank enthaltenes Standardverfahrensparameterset zugeordnet wirdIn einer besonders bevorzugten Ausführungsform ist das erfindungsgemäße Verfahren zur kontinuierlichen Herstellung konservierter flüssiger Produkte ein Verfahren zur kontinuierlichen Herstellung nicht-thermisch konservierter flüssiger Produkte.

In einem Verfahrensschritt a) wird das zu konservierende flüssige Produkt bereitgestellt.

In Verfahrensschritt b) wird eine Datenbank bereitgestellt, die eine Vielzahl von Standardproduktparametersets zu physikalisch-chemischen und mikrobiologischen Eigenschaften flüssiger Standardprodukte enthält, wobei jeweils ein Standardproduktparameterset mit einem dazugehörigen vorbestimmten Standardverfahrensparameterset und einem Zielproduktparameterset verknüpft ist. Dabei bilden jeweils ein Standardproduktparameterset, ein Standardverfahrensparameterset und ein Zielproduktparameterset eine zusammengehörige Gruppe. In einer solchen Gruppe ist definiert, durch Anwendung welcher konkreten Verfahrensparameter (Standardverfahrensparameterset) auf ein zu konservierendes Standardprodukt mit bestimmten physikalisch-chemischen und mikrobiologischen Eigenschaften (Standardproduktparameterset) reproduzierbar ein definiertes konserviertes flüssiges Produkt mit bestimmten erwünschten physikalisch-chemischen und mikrobiologischen Eigenschaften (Zielproduktparameterset) erhalten werden kann.

In einer besonders bevorzugten Ausführungsform kann vorgesehen sein, die physikalisch-chemischen und mikrobiologischen Eigenschaften, welche ein Standardproduktparameterset charakterisieren, hinsichtlich der Zuordnung dazugehöriger bestimmter Standardverfahrensparameter zu gewichten. Insbesondere kann einzelnen Eigenschaften von Produkten, insbesondere mikrobiologischen Eigenschaften, insbesondere der Keimzahl oder Identifikation der Mikroorganismen, eine besonders hohe Gewichtung für die Bestimmung entsprechender einzusetzender Standardverfahrensparameter zukommen.

Das erfindungsgemäße Verfahren sieht in Verfahrensschritt c) die Bestimmung eines spezifischen Produktparametersets eines zu konservierenden flüssigen Produktes bei einem ersten Druckniveau vor, um Aufschluss über die physikalisch-chemischen und mikrobiologischen Eigenschaften des konkreten Produktes zu erhalten. Ausgehend von dem ermittelten spezifischen Produktparameterset erfolgt anschließend eine Zuordnung dieses Produktparametersets zu einem in einer gemäß Verfahrensschritt b) bereitgestellten Datenbank hinterlegten bestimmten Standardverfahrensparameterset.

Abhängig von den für das konkrete zu konservierende flüssige Produkt bestimmten Produktparametern, insbesondere den physikalisch-chemischen und mikrobiologischen Eigenschaften des zu konservierenden flüssigen Produktes ergibt sich das in Schritt c) ermittelte spezifische Produktparameterset, das dem in der Datenbank vorliegenden Standardproduktparameterset mit einem dazugehörigen vorbestimmten Standardverfahrensparameterset und einem Zielproduktparameterset zugeordnet wird, das Übereinstimmung mit dem spezifischen Produktparameterset aufweist. Sofern die Datenbank kein Standardproduktparameterset umfasst, das mit dem ermittelten spezifischen Produktparameterset Übereinstimmung aufweist, so ist erfindungsgemäß bevorzugt vorgesehen, dem ermittelten ersten spezifischen Produktparameterset dasjenige Standardproduktparameterset mit einem dazugehörigen vorbestimmten Standardverfahrensparameterset und einem Zielproduktparameterset aus der Datenbank zuzuordnen, das die geringste Abweichung zu dem ermittelten spezifischen Produktparameterset aufweist.

Nachdem dem ermittelten spezifischen Produktparameterset ein Standardproduktparameterset mit einem dazugehörigen vorbestimmten Standardverfahrensparameterset und einem Zielproduktparameterset aus der Datenbank zugeordnet wurde, erfolgt erfindungsgemäß die Anwendung der Verfahrensparameter des dem Standardproduktparameterset zugehörigen Standardverfahrensparametersets auf das zu konservierende flüssige Produkt bei einem zweiten Druckniveau. Erfindungsgemäß sind das erste und zweite Druckniveau unterschiedlich. Dabei umfasst jedes der in der Datenbank hinterlegten Standardverfahrensparametersets diejenigen Verfahrensparameter, die bei Anwendung auf das diesem Standardverfahrensparameterset in der Datenbank zugeordnete Standardprodukt, insbesondere bei Durchführung eines kontinuierlichen Druckwechselverfahrens mit definierten Verfahrensparametern, insbesondere umfassend die Höhe des Drucks des zweiten Druckniveaus, die während des Verfahrens vorherrschende Temperatur, die Art des Prozessgases, die Haltezeit, das Gas-/Flüssigkeitsverhältnis und die Druckentlastung, zu einem konservierten Zielprodukt mit definierten Zielproduktparametern führen. Nach der Anwendung der entsprechenden Verfahrensparameter auf das zu konservierende flüssige Produkt erfolgt in Verfahrensschritt f) erfindungsgemäß eine weitere Bestimmung der Produktparameter des durch Anwendung der entsprechenden Verfahrensparameter enthaltenen flüssigen Produktes durch Messung dessen physikalisch-chemischer und mikrobiologischer Eigenschaften bei dem ersten Druckniveau, so dass ein weiteres spezifisches Produktparameterset erhalten wird. Das erhaltene weitere spezifische Produktparameterset wird nun mit dem Zielproduktparameterset verglichen, das zu dem zuvor in Verfahrensschritt d) dem ersten spezifischen Produktparameterset zugeordneten Standardproduktparameterset zugehörig ist. Sofern das weitere spezifische Produktparameterset mit dem Zielproduktparameterset Übereinstimmung aufweist, ist das flüssige konservierte Produkt erhalten worden. Bei Nicht-Übereinstimmung des weiteren spezifischen Produktparametersets mit dem Zielproduktparameterset werden erfindungsgemäß die Verfahrensschritte d) bis g) einmal oder, sofern erforderlich mehrmals, wiederholt, wobei jeweils in Schritt d) dem jeweils zuvor in Schritt f) bestimmten jeweils weiteren spezifischen Produktparameterset ein in der gemäß Schritt b) bereitgestellten Datenbank enthaltenes Standardproduktparameterset zugeordnet wird, das Übereinstimmung zu dem weiteren spezifischen Produktparameterset aufweist.

Sofern die Datenbank kein Standardproduktparameterset umfasst, das mit dem ermittelten weiteren spezifischen Produktparameterset Übereinstimmung aufweist, so ist erfindungsgemäß bevorzugt vorgesehen, dem ermittelten weiteren spezifischen Produktparameterset dasjenige Standardproduktparameterset mit einem dazugehörigen vorbestimmten Standardverfahrensparameterset und einem Zielproduktparameterset aus der Datenbank zuzuordnen, das die geringste Abweichung zu dem ermittelten spezifischen Produktparameterset aufweist.

Erfindungsgemäß werden die Schritte d) bis g) so oft wiederholt, bis eine Übereinstimmung des jeweils erhaltenen weiteren spezifischen Produktparametersets mit dem Zielproduktparameterset und somit der Erhalt des flüssigen konservierten Produktes erreicht wird.

Sobald die Übereinstimmung des spezifischen Produktparametersets mit dem Zielproduktparameterset erreicht ist, kann das gemäß der Verfahrensschritte a) bis g) erhaltene flüssige konservierte Produkt gewonnen werden. Die erfindungsgemäße Verfahrensweise erlaubt daher die kontinuierliche Herstellung von flüssigen konservierten Produkten.

Ausgehend von einem kontinuierlich in Verfahrensschritt a) bereitgestellten zu konservierenden flüssigen Produkt kann das erfindungsgemäße Verfahren kontinuierlich, insbesondere in serieller oder paralleler Ausgestaltung von Produktströmen, zur Gewinnung von einem oder mehreren Produktströmen enthaltend flüssiges konserviertes Produkt durchgeführt werden.

Erfindungsgemäß bevorzugt handelt es sich bei dem erfindungsgemäßen Verfahren um ein computerimplementiertes Verfahren zur kontinuierlichen Herstellung, vorzugsweise nicht-thermisch, konservierter flüssiger Produkte, insbesondere ein automatisiertes computerimplementiertes Verfahren zur kontinuierlichen Herstellung, vorzugsweise nicht-thermisch, konservierter flüssiger Produkte.

Insbesondere werden die erfindungsgemäßen Verfahrensschritte b), d) und g) sowie optional h) mittels maschinellem Lernen, insbesondere mittels mindestens eines künstlichen neuronalen Netzwerkes (KNN; Englisch: ANN), durchgeführt, insbesondere mittels mindestens eines künstlichen neuronalen Netzwerkes, eingesetzt in einer programmierbaren Steuereinrichtung mit einem in den Speicher der programmierbaren Steuereinrichtung geladenen Computerprogrammprodukt. Insbesondere ist das erfindungsgemäße Verfahren ein selbstlernendes, insbesondere maschinell selbstlernendes Verfahren.

Insbesondere werden in bevorzugter Ausführungsform die erfindungsgemäß vorgesehenen Verfahrensschritte, insbesondere die Verfahrensschritte b), d) und g), unter Einsatz maschinellen Lernens und einer programmierbaren Steuereinheit durchgeführt.

In einer besonders bevorzugten Ausführungsform ist vorgesehen, dass das in Verfahrensschritt b) bereitgestellte Standardproduktparameterset, welches mit einem dazugehörigen vorbestimmten Standardverfahrensparameterset und einem Zielproduktparameterset verknüpft ist, das Ergebnis eines maschinell selbstlernenden Verfahrens darstellt, insbesondere das Ergebnis eines maschinell selbstlernenden Verfahrens gemäß der vorliegenden Erfindung, insbesondere das Ergebnis eines Durchlaufens der Verfahrensabfolgen a) bis g), insbesondere b) bis g), insbesondere c) bis g). Im Rahmen der Durchführung dieser Verfahrensschritte wird bevorzugt durch maschinelles Lernen unter Nutzung mindestens einer programmierbaren Steuereinheit eine mit zunehmender Häufigkeit der Durchführung der Verfahrensabfolgen a) bis g), insbesondere b) bis g), insbesondere c) bis g), verbesserte Anpassung, insbesondere zunehmende Optimierung, von mit Standardproduktparametersets verknüpften Standardverfahrensparametersets erreicht, insbesondere können zum Beispiel angepasste, weitere mit schon in der Datenbank vorhandenen oder neuen Standardverfahrensparametersets verknüpfte Standardproduktparametersets in die der Steuereinheit zugeordnete Datenbank eingepflegt werden. In einer besonders bevorzugten Ausführungsform ist bevorzugt vorgesehen, dass im Rahmen des Durchlaufens der Verfahrensabfolgen a) bis g), insbesondere b) bis g), insbesondere c) bis g), während des maschinell selbstlernenden Verfahrens weitere, neue Standardproduktparametersets und dazugehörige neue Standardverfahrensparametersets mit damit verknüpften Zielproduktparametersets erstellt und/oder bereits in der Datenbank vorhandene Standardproduktparametersets mit optimierten Standardverfahrensparametersets verknüpft werden. Insbesondere kann durch die erfindungsgemäß bevorzugte selbstlernende Verfahrensweise erreicht werden, in der Datenbank eine zunehmende Anzahl an Standardproduktparametersets bereitzustellen, die möglichst identisch oder weitgehend identisch zu zu erwartenden spezifischen Produktparametersets von zu konservierenden flüssigen Produkten sind und für die dazugehörige durch das maschinelle Lernen entwickelte Standardverfahrensparametersets mit zugehörigem Zielproduktparametersets in der Datenbank vorliegen. Das erfindungsgemäß bevorzugt vorgesehene maschinelle selbstlernende Verfahren erhöht daher einerseits die Anzahl vorliegender Standardproduktparametersets in der Datenbank, um so die Wahrscheinlichkeit zu erhöhen, eine möglichst gute Übereinstimmung zu spezifischen Produktparametersets des zu konservierenden flüssigen Produktes zu erreichen und führt andererseits in bevorzugter Ausführungsform zu optimierten Standardverfahrensparametersets insofern, als dass zu konservierende Produkte gekennzeichnet durch bestimmte spezifische Produktparametersets in effizienterer Weise zu Produkten mit Zielproduktparametern überführt werden können. Dies führt zu einer deutlichen Verkürzung und Effizienzerhöhung der erfindungsgemäßen Verfahrensweise.

Die erfindungsgemäß bevorzugt eingesetzte Verfahrensweise unter Verwendung von maschinellem Lernen und mindestens einer programmierbareren Steuereinheit, insbesondere Mikroprozessor, kann in an sich fachüblicher Weise erfolgen. In besonders bevorzugter Ausführungsform wird maschinelles Lernen in Form eines maschinellen Lernmodells eingesetzt, wobei das maschinelle Lernmodell vorzugsweise in einer Trainingsphase und einer Testphase, insbesondere einer Trainingsphase, einer Validierungsphase und einer Testphase durchgeführt wird. In besonders bevorzugter Ausführungsform findet die Trainingsphase getrennt von der Testphase statt.

In bevorzugter Ausführungsform sieht das maschinelle Lernmodell ein Batch-Lernen, bei dem alle Eingabe-/ und Ausgabeparameter gleichzeitig vorhanden sind oder ein kontinuierlich sequentielles Lernen vor, bei dem sich die Struktur des Netzes zeitlich versetzt entwickelt. In besonders bevorzugter Ausführungsform kann das maschinelle Lernprogramm ein Offline-Lernmodell sein, bei dem alle Daten gespeichert sind und somit wiederholbar zugreifbar sind oder in einer weiteren bevorzugten Ausführungsform ein Online-Lernmodell, bei dem die Parameter nach mehrmaligem Ausführen und Anpassen verloren gehen.

Im Rahmen der Trainingsphase lernt das maschinelle Lernmodell aus Beispielen Muster und Gesetzmäßigkeiten zu erkennen, insbesondere Zusammenhänge zwischen Produktparametern, insbesondere physikalisch-chemischen und mikrobiologischen Eigenschaften und Verfahrensparametern zu erkennen, insbesondere Auswirkungen der Anwendung von Verfahrensparametern auf Produkte mit bestimmten Produktparametern zu erkennen. Das maschinelle Lernmodell lernt insbesondere aus Anwendung der Verfahrensparameter auf Produkte erhaltene Zielproduktparameter zu prognostizieren.

Im Rahmen der Trainings- und Testphase werden in selbstlernender Weise insbesondere derartige Zusammenhänge erkannt, gegebenenfalls verallgemeinert und rückgekoppelt in das maschinelle Lernmodell eingespeist.

Insbesondere ist das selbstlernende Verfahren der vorliegenden Erfindung dadurch gekennzeichnet, dass in einem weiteren Verfahrensschritt h) ein sich durch Kenntnis und Auswertung der in den Verfahrensschritten d) bis g) durchgeführten Verfahrensschritte ergebenes optimiertes Standardverfahrensparameterset erhalten und mit dem gewünschten Zielproduktparameterset sowie dem in Verfahrensschritt c) bestimmten spezifischen Produktparameterset des in Verfahrensschritt a) bereitgestellten flüssigen Produktes verknüpft und in die in Schritt b) bereitgestellte Datenbank eingepflegt wird.

Besonders bevorzugt wird das Verfahren zur kontinuierlichen Herstellung, vorzugsweise nicht-thermisch, konservierter flüssiger Produkte in einer erfindungsgemäßen Vorrichtung durchgeführt, umfassend mindestens ein Gefäß, bevorzugt mindestens einen Reaktor, insbesondere eines Druckwechselreaktor, mindestens eine Messeinrichtung, und mindestens eine programmierbare Steuereinrichtung mit einem in den Speicher der programmierbaren Steuereinrichtung geladenen Computerprogrammprodukt, umfassend eine in Schritt b) bereitgestellte Datenbank und Programmcodemittel zur Durchführung des Verfahrens zur kontinuierlichen Herstellung, vorzugsweise nicht-thermisch, konservierter flüssiger Produkte umfassend die Schritte a) bis g).

Gemäß der vorliegenden Erfindung, bevorzugt gemäß dieser Ausführungsform wird, in Schritt c) zunächst ein spezifisches Produktparameterset des zu konservierenden flüssigen Produktes bei einem ersten Druckniveau mittels der mindestens einen Messeinrichtung bestimmt. Anschließend wird in Schritt d) mittels der in der Datenbank des in den Speicher der programmierbaren Steuereinrichtung geladenen Computerprogrammproduktes hinterlegten Standardproduktparametersets zu physikalisch-chemischen und mikrobiologischen Eigenschaften flüssiger Standardprodukte das ermittelte spezifische Produktparameterset dem Standardproduktparameterset mit einem dazugehörigen vorbestimmten Standardverfahrensparameterset und einem Zielproduktparameterset aus der Datenbank zugeordnet, das mit dem spezifischen Produktparameterset Übereinstimmung aufweist.

Sofern die Datenbank des in den Speicher der programmierbaren Steuereinrichtung geladenen Computerprogrammproduktes kein Standardproduktparameterset umfasst, das mit dem ermittelten spezifischen Produktparameterset Übereinstimmung aufweist, so kann erfindungsgemäß bevorzugt vorgesehen sein, dem ermittelten spezifischen Produktparameterset dasjenige Standardproduktparameterset mit einem dazugehörigen vorbestimmten Standardverfahrensparameterset und einem Zielproduktparameterset aus der Datenbank zuzuordnen, das die geringste Abweichung mit dem ermittelten spezifischen Produktparameterset aufweist.

Nach der Zuordnung eines Standardproduktparametersets sowie eines dazugehörigen vorbestimmten Standardverfahrensparametersets und einem Zielproduktparameterset zu dem mittels der mindestens einen Messeinrichtung bestimmten spezifischen Produktparameterset erfolgt in Schritt e) die Anwendung der Verfahrensparameter des Standardverfahrensparametersets auf das zu konservierende Produkt in einem Gefäß, bevorzugt in einem Reaktor, der erfindungsgemäßen Vorrichtung bei einem zweiten Druckniveau, wobei erfindungsgemäß bevorzugt eine entsprechende Ansteuerung und Regulierung der Verfahrensparameter des Standardverfahrensparametersets durch die programmierbare Steuereinrichtung der erfindungsgemäßen Vorrichtung erfolgt.

In einer besonders bevorzugten Ausführungsform werden in Verfahrensschritt e), beziehungsweise v), übliche Verfahrensweisen der Druckwechseltechnologie eingesetzt, insbesondere mithilfe einer Hochdruckpumpe, die die zu konservierenden flüssigen Produkte und Prozessgase unter Druck setzt, wobei anschließend das unter Druck versetzte Prozessgas mit dem unter Druck stehenden flüssigen zu konservierenden Produkt gemischt und homogenisiert wird und wobei anschließend schlagartig, vorzugsweise in einem Entspannungsventil, das Gemisch auf Umgebungsdruck oder einen anderen unter dem zweiten Druckniveau liegenden Druck, insbesondere das erste Druckniveau expandiert wird.

In bevorzugten Ausführungsformen können Drücke von 2 bis 1500 bar, insbesondere 100 bis 500 bar, eingesetzt werden, wobei bevorzugt das Prozessgas vor dem Mischen unter höherem Druck als das zu konservierende flüssige Produkt steht.

Im Rahmen des Anwendens der Verfahrensparameter in Schritt e) beziehungsweise v) wird das zweite Druckniveau reduziert, insbesondere findet eine, vorzugsweise schlagartige, Druckentlastung auf einen reduzierten Druck zum Beispiel Umgebungsdruck, insbesondere das erste Druckniveau statt.

In besonders bevorzugter Ausführungsform liegt in Verfahrensschritt e), beziehungsweise v), sowohl das zu konservierende flüssige Produkt als auch Prozessgas unter Druck vor, wobei bevorzugt sowohl das Prozessgas als auch das flüssige zu konservierende Produkt, zum Beispiel in einem statischen Mischer, unter Druck vermengt werden und anschließend ein schlagartiges Entspannen des unter Druck stehenden Gemisches auf insbesondere Umgebungsdruck stattfindet.

Nach Anwendung der entsprechenden Verfahrensparameter auf das zu konservierende flüssige Produkt in dem mindestens einen Gefäß, bevorzugt in dem mindestens einen Reaktor, erfolgt in Schritt f) eine weitere Bestimmung der Produktparameter des durch Anwendung der entsprechenden Verfahrensparameter enthaltenen flüssigen Produktes durch Messung dessen physikalisch-chemischer und mikrobiologischer Eigenschaften mittels der mindestens einen Messeinrichtung bei dem ersten Druckniveau, so dass ein weiteres spezifischen Produktparameterset erhalten wird. Das weitere spezifische Produktparameterset wird im Anschluss in Schritt g) mit dem zuvor dem ersten spezifischen Produktparameterset zugeordneten Standardproduktparameterset zugehörigen Zielproduktparameterset in der Datenbank des in den Speicher der programmierbaren Steuereinrichtung geladenen Computerprogrammproduktes verglichen. Sofern durch die programmierbare Steuereinrichtung eine Übereinstimmung der Produktparameter des spezifischen Produktparametersets mit den Zielproduktparametern des Zielproduktparametersets feststellt wird, ist das flüssige konservierte Produkt erhalten worden. Wird durch die programmierbare Steuereinrichtung hingegen eine Nicht-Übereinstimmung der Produktparameter des weiteren spezifischen Produktparametersets mit den Zielproduktparametern des Zielproduktparameterset festgestellt, so werden die Verfahrensschritte d) bis g) wiederholt, wobei jeweils in Schritt d) dem jeweils zuvor in Schritt f) bestimmten jeweils weiteren spezifischen Produktparameterset ein zugehöriges in der Datenbank des in den Speicher der programmierbaren Steuereinrichtung geladenen Computerprogrammproduktes hinterlegtes Standardproduktparameterset zugeordnet wird, das Übereinstimmung zu dem weiteren spezifischen Produktparameterset aufweist.

Sofern die Datenbank des in den Speicher der programmierbaren Steuereinrichtung geladenen Computerprogrammproduktes kein Standardproduktparameterset umfasst, das mit dem ermittelten spezifischen Produktparameterset Übereinstimmung aufweist, so kann erfindungsgemäß bevorzugt vorgesehen sein, dem ermittelten weiteren spezifischen Produktparameterset dasjenige Standardproduktparameterset mit einem dazugehörigen vorbestimmten Standardverfahrensparameterset und einem Zielproduktparameterset aus der Datenbank zuzuordnen, das die geringste Abweichung mit dem ermittelten spezifischen Produktparameterset aufweist.

Erfindungsgemäß werden die Schritte d) bis g) so oft wiederholt, bis eine Übereinstimmung des weiteren spezifischen Produktparametersets mit dem Zielproduktparameterset und somit der Erhalt des flüssigen konservierten Produktes erreicht wird.

Mit dem erfindungsgemäßen Verfahren ist es somit ausgehend von den physikalisch-chemischen und mikrobiologischen Eigenschaften zu konservierender flüssiger Produkte vorteilhafterweise möglich, eine standardisierte, effiziente, zuverlässige, schonende und damit optimierte, vorzugsweise nicht-thermische, Konservierung flüssiger Produkte zu erzielen.

In einer bevorzugten Ausführungsform der vorliegenden Erfindung handelt es sich bei der in Schritt b) bereitgestellten Datenbank um eine auf einem Server hinterlegte Datenbank. Besonders bevorzugt handelt es sich bei der in Schritt b) bereitgestellten Datenbank um eine auf einem Server hinterlegte Datenbank, auf die über ein Netzwerk zugegriffen werden kann. Bevorzugt ist die Datenbank eine Online-Datenbank.

In besonders bevorzugter Ausführungsform wird die erfindungsgemäße Verfahrensweise online- und/oder Cloud-gestützt durchgeführt, insbesondere unter Nutzung von mindestens einer Datenbank und mindestens einer programmierbaren Steuereinheit, die zumindest teilweise auf einem, gegebenenfalls externen, Cloud-basierten und einem Online-Zugriff ermöglichenden Server oder Serversystem lokalisiert sind.

Erfindungsgemäß bevorzugt ermöglicht es insbesondere eine online-verfügbare Datenbank kontinuierlich neue Informationen, insbesondere spezifische Produktparametersets, Standardverfahrensparametersets, Standardproduktparametersets und/oder gegebenenfalls Zielproduktparametersets in die Datenbank aufzunehmen.

In einer weiteren Ausführungsform der vorliegenden Erfindung handelt es sich bei der Datenbank um eine auf einem Datenträger, insbesondere einem lokalen Datenträger, hinterlegte Datenbank.

Besonders bevorzugt ist die in Schritt b) bereitgestellte Datenbank im Speicher einer programmierbaren Steuereinrichtung einer Vorrichtung zur kontinuierlichen, vorzugsweise nicht-thermischen, Konservierung flüssiger Produkte hinterlegt. Bevorzugt ist die Datenbank eine Offline-Datenbank.

In einer bevorzugten Ausführungsform der vorliegenden Erfindung ist das zu konservierende Produkt ein biogenes Produkt, das heißt ein von biologischen Organismen stammendes Produkt. Bevorzugt ist das zu konservierende Produkt ein tierisches oder pflanzliches Produkt. Besonders bevorzugt ist das zu konservierende Produkt ein tierisches Produkt, insbesondere ein Eier- oder Milchprodukt.

In einer bevorzugten Ausführungsform der vorliegenden Erfindung handelt es sich bei dem zu konservierenden Produkt um eine Lösung, eine Dispersion oder eine Suspension.

In bevorzugter Ausführungsform der vorliegenden Erfindung ist das zu konservierende Produkt ein zumindest teilweise, bevorzugt vollständig, aus Pflanzen gewonnenes safthaltiges Produkt.

In einer bevorzugten Ausführungsform der vorliegenden Erfindung ist das zu konservierende Produkt ein wasserhaltiges Produkt.

In einer bevorzugten Ausführungsform der vorliegenden Erfindung ist das wasserhaltige Produkt ein Produkt, das einen Fruchtsaft enthält, insbesondere Orangensaft, Pflaumensaft, Grapefruitsaft, Apfelsaft oder Birnensaft.

In einer bevorzugten Ausführungsform der vorliegenden Erfindung ist das wasserhaltige Produkt ein Produkt, das einen Gemüsesaft enthält, insbesondere Tomatensaft, Karottensaft oder Rote-Bete-Saft.

In einer bevorzugten Ausführungsform der vorliegenden Erfindung ist das zu konservierende Produkt ein Saft, insbesondere ein wasserhaltiger Saft, der Frucht- und/oder Gemüsesaft enthält.

In einer bevorzugten Ausführungsform der vorliegenden Erfindung enthält das zu konservierende Produkt, vorzugsweise flüssige Produkt, zumindest eine Komponente ausgewählt aus der Gruppe bestehend aus Pflanzenextrakt, Pflanzenkonzentrat, Getreideextrakt, Hopfenextrakt, Smoothie, Fruchtsaft, Fruchtnektar, Fruchtsaftkonzentrat, Gemüsesaft und Gemüsesaftkonzentrat.

Bevorzugt ist das zu konservierende Produkt ein pflanzliches Produkt, insbesondere ein Pflanzenextrakt, Pflanzenkonzentrat, Smoothie, Fruchtsaft, Fruchtnektar, Fruchtsaftkonzentrat, Gemüsesaft oder Gemüsesaftkonzentrat.

In einer bevorzugten Ausführungsform der vorliegenden Erfindung ist das Produkt ein Molkereiprodukt.

In einer bevorzugten Ausführungsform der vorliegenden Erfindung ist das zu konservierende Produkt ein Molkereiprodukt enthaltendes Produkt.

In einer bevorzugten Ausführungsform der vorliegenden Erfindung ist das Produkt ein Milchgetränk.

In einer bevorzugten Ausführungsform der vorliegenden Erfindung ist das Produkt ein Milchmischgetränk.

In einer besonders bevorzugten Ausführungsform der vorliegenden Erfindung ist das Produkt, insbesondere das flüssige Produkt, ein Gärungsprodukt, insbesondere ein Gärungsprodukt pflanzlicher Materialien, insbesondere Bier, Wein oder Sekt.

In einer weiteren bevorzugten Ausführungsform der vorliegenden Erfindung ist das zu konservierende Produkt ein alkoholhaltiges Getränk, zum Beispiel ein alkoholhaltiges Bier oder ein alkoholhaltiger Wein oder Sekt, insbesondere Rot- oder Weißwein.

Das zu konservierende Produkt kann auch ein alkoholfreies Bier oder alkoholfreier Wein oder Sekt sein.

Bevorzugt ist das zu konservierende Produkt ein Fruchtsaft, insbesondere Orangensaft, Pflaumensaft, Birnensaft, Grapefruitsaft oder Apfelsaft.

Bevorzugt ist das zu konservierende Produkt ein Gemüsesaft, insbesondere Rote-Bete-Saft, Karottensaft oder Tomatensaft.

Bevorzugt ist das zu konservierenden Produkt Milch.

In einer weiteren bevorzugten Ausführungsform der vorliegenden Erfindung ist das zu konservierende Produkt kein biogenes Produkt, das heißt kein von biologischen Organismen stammendes Produkt.

In einer bevorzugten Ausführungsform der vorliegenden Erfindung ist das zu konservierende Produkt ein synthetisch erzeugtes Produkt. Bevorzugt ist das zu konservierende Produkt ein synthetisch erzeugtes Produkt für medizinische Zwecke.

In einer weiteren bevorzugten Ausführungsform der vorliegenden Erfindung ist das zu konservierende Produkt eine Mischung aus einem biogenen Produkt und einem synthetisch erzeugten Produkt.

In einer bevorzugten Ausführungsform der vorliegenden Erfindung kann das zu konservierende Produkt vor Durchführung des Verfahrensschritts c) homogenisiert werden und/oder die Partikelgröße verändert, insbesondere verkleinert werden.

In einer bevorzugten Ausführungsform der vorliegenden Erfindung erfolgt das Bestimmen eines spezifischen Produktparametersets in Schritt c), bevorzugt in Schritt f), bevorzugt in den Schritten c) und f), mittels Ultraschall-gestützter Methoden, mittels biochemischer Methoden, immunologischer Methoden, molekularbiologischer Methoden, mittels rheologischer Messmethoden, mittels viskositätsmessender Methoden, mittels optischer, spektroskopischer, chromatographischer und/oder elektroanalytischer Methoden.

In bevorzugter Ausführungsform sind biochemische Methoden solche, die sich enzymatischer Aktivitäten bedienen und/oder enzymatische Aktivitäten messen.

In bevorzugter Ausführungsform sind immunologische Methoden Antikörper-messende und/oder Antikörper-nutzende Messmethoden.

In einer bevorzugten Ausführungsform der vorliegenden Erfindung erfolgt das Bestimmen eines spezifischen Produktparametersets in Schritt c), bevorzugt in Schritt f), bevorzugt in den Schritten c) und f), insbesondere mittels Photometrie, Kalorimetrie, Polarimetrie, Atomabsorptions-, Mikrowellen-, IR-, Nah-IR-, Raman-, UV-, NMR-, ESR-Spektroskopie, Flammenphotometrie, Röntgenfluoreszenz, ICP-MS, Röntgen-, Elektronen- und/oder Neutronenbeugung.

In einer besonders bevorzugten Ausführungsform der vorliegenden Erfindung erfolgt das Bestimmen eines spezifischen Produktparametersets in Schritt c), bevorzugt in Schritt f), bevorzugt in den Schritten c) und f), mittels On-line-Bestimmung.

In einer weiteren bevorzugten Ausführungsform der vorliegenden Erfindung erfolgt das Bestimmen eines spezifischen Produktparametersets in Schritt c), bevorzugt in Schritt f), bevorzugt in den Schritten c) und f), mittels Off-line-Bestimmung.

In der bevorzugten Ausführungsform der vorliegenden Erfindung liegt das erste Druckniveau im Bereich von 0,95 bis 1,1 bar, bevorzugt 0,96 bis 1,09 bar, bevorzugt 0,97 bis 1,08 bar, bevorzugt 0,98 bis 1,07 bar, bevorzugt 0,99 bis 1,06 bar, bevorzugt 1 bis 1,05 bar, bevorzugt 1 bis 1,04 bar, bevorzugt 1 bis 1,03 bar, bevorzugt 1,01 bis 1,02 bar.

In der besonders bevorzugten Ausführungsform der vorliegenden Erfindung liegt das erste Druckniveau bei atmosphärischem Druck.

In einer besonders bevorzugten Ausführungsform der vorliegenden Erfindung erfolgt vor Schritt e) ein Schritt der Auskeimung der im bereitgestellten Produkt vorliegenden Sporen, insbesondere Bakterien- und Pilzsporen.

Bevorzugt erfolgt der Schritt der Auskeimung der im bereitgestellten Produkt vorliegenden Sporen, insbesondere Bakterien- und Pilzsporen, bei einer Temperatur von 10 bis 100 °C, bevorzugt 10 bis 55 °C, bevorzugt 10 bis 50 °C, bevorzugt 10 bis 45 °C, bevorzugt 10 bis 40 °C, bevorzugt 15 bis 55 °C, bevorzugt 15 bis 50 °C, bevorzugt 15 bis 45 °C, bevorzugt 15 bis 40 °C, bevorzugt 20 bis 55 °C, bevorzugt 20 bis 50 °C, bevorzugt 20 bis 45 °C, bevorzugt 20 bis 40 °C, bevorzugt 25 bis 55 °C, bevorzugt 25 bis 50 °C, bevorzugt 25 bis 45 °C, bevorzugt 25 bis 40 °C, bevorzugt bei Raumtemperatur.

In einer bevorzugten Ausführungsform der vorliegenden Erfindung erfolgt der Schritt der Auskeimung der im bereitgestellten Produkt vorliegenden Sporen, insbesondere Bakterien- und Pilzsporen, für einen Zeitraum von 30 s bis 24 Stunden, bevorzugt 30 s bis 240 min, bevorzugt 1 bis 240 min, bevorzugt 5 bis 240 min, bevorzugt 10 bis 240 min, bevorzugt 30 bis 240 min, besonders bevorzugt 10 bis 180 min.

In einer weiteren bevorzugten Ausführungsform der vorliegenden Erfindung erfolgt der Schritt der Auskeimung der im bereitgestellten Produkt vorliegenden Sporen, insbesondere Bakterien- und Pilzsporen, für einen Zeitraum von mindestens 30 s, bevorzugt mindestens 1 min, bevorzugt mindestens 5 min, bevorzugt mindestens 10 min, bevorzugt mindestens 20 min, bevorzugt mindestens 30 min, bevorzugt mindestens 45 min, bevorzugt mindestens 60 min.

Besonders bevorzugt erfolgt der Schritt der Auskeimung der im bereitgestellten Produkt vorliegenden Sporen, insbesondere Bakterien- und Pilzsporen, unter Druckbeaufschlagung. Bevorzugt erfolgt der Schritt der Auskeimung der im bereitgestellten Produkt vorliegenden Sporen, insbesondere Bakterien- und Pilzsporen, bei einem Druck von 10 bis 700 bar, bevorzugt 10 bis 500 bar, bevorzugt 20 bis 500 bar, bevorzugt 50 bis 500 bar, bevorzugt 100 bis 500 bar, besonders bevorzugt 200 bis 500 bar.

In weiteren bevorzugter Ausführungsform der vorliegenden Erfindung erfolgt der Schritt der Auskeimung der im bereitgestellten Produkt vorliegenden Sporen, insbesondere Bakterien- und Pilzsporen, bis mindestens 60%, bevorzugt mindestens 70%, mindestens 80%, bevorzugt mindestens 85%, bevorzugt mindestens 90%, bevorzugt mindestens 95%, bevorzugt mindestens 96%, bevorzugt mindestens 97%, bevorzugt mindestens 98%, bevorzugt mindestens 99%, bevorzugt mindestens 99,5%, bevorzugt mindestens 99,9%, besonders bevorzugt 100%, der in dem zu konservierenden Produkt vorliegenden Sporen, insbesondere Bakterien- und Pilzsporen, ausgekeimt sind.

In einer bevorzugten Ausführungsform der vorliegenden Erfindung wird der Schritt der Auskeimung der im bereitgestellten Produkt vorliegenden Sporen, insbesondere Bakterien- und Pilzsporen, wiederholt, sofern nach einem ersten Schritt der Auskeimung keine Auskeimung der in dem zu konservierenden Produkt vorliegenden Sporen, insbesondere Bakterien- und Pilzsporen, von mindestens 60%, bevorzugt mindestens 70%, bevorzugt mindestens 80%, bevorzugt mindestens 85%, bevorzugt mindestens 90%, bevorzugt mindestens 95%, bevorzugt mindestens 96%, bevorzugt mindestens 97%, bevorzugt mindestens 98%, bevorzugt mindestens 99%, bevorzugt mindestens 99,5%, bevorzugt mindestens 99,9%, besonders bevorzugt 100%, erreicht wurde.

In einer bevorzugten Ausführungsform der vorliegenden Erfindung umfasst ein Standardverfahrensparameterset die Höhe des Drucks des zweiten Druckniveaus, Temperatur, Art des Prozessgases, Haltezeit, Gas-/Flüssigkeitsverhältnis und/oder Druckentlastung, bevorzugt sämtliche dieser Parameter.

Die Druckentlastung gibt bevorzugt an, auf welchen Druck das zweite Druckniveau entspannt wird, insbesondere einen Druck unterhalb des zweiten Druckniveaus, zum Beispiel atmosphärischer Druck, und/oder in welcher Geschwindigkeit die Entspannung erfolgt.

In einer bevorzugten Ausführungsform der vorliegenden Erfindung umfassen die physikalisch-chemischen Eigenschaften des flüssigen Produkts in dem Standardproduktparameterset die quantitative und qualitative chemische Zusammensetzung, enzymatische Aktivität, Dichte, Partikelgröße, rheologische Eigenschaften, Trockensubstanzgehalt, Viskosität, Molalität, pH-Wert, Ionenstärke und/oder Leitfähigkeit, bevorzugt sämtliche dieser Parameter.

In einer bevorzugten Ausführungsform der vorliegenden Erfindung umfassen die physikalisch-chemischen Eigenschaften des flüssigen Produkts in dem spezifischen Produktparameterset die quantitative und qualitative chemische Zusammensetzung, enzymatische Aktivität, Dichte, Partikelgröße, rheologische Eigenschaften, Trockensubstanzgehalt, Viskosität, Molalität, pH-Wert, Ionenstärke und/oder Leitfähigkeit, bevorzugt sämtliche dieser Parameter.

In einer weiteren bevorzugten Ausführungsform der vorliegenden Erfindung umfassen die physikalisch-chemischen Eigenschaften des flüssigen Produkts in dem Zielproduktparameterset die quantitative und qualitative chemische Zusammensetzung, enzymatische Aktivität, Dichte, Partikelgröße, rheologische Eigenschaften, Trockensubstanzgehalt, Viskosität, Molalität, pH-Wert, Ionenstärke und/oder Leitfähigkeit, bevorzugt sämtliche dieser Parameter.

In einer weiteren bevorzugten Ausführungsform der vorliegenden Erfindung umfassen die physikalisch-chemischen Eigenschaften des flüssigen Produkts in dem Produktparameterset, insbesondere dem Standardproduktparameterset, dem spezifischen Produktparameterset und dem Zielproduktparameterset, die quantitative und qualitative chemische Zusammensetzung, enzymatische Aktivität, Dichte, Partikelgröße, rheologische Eigenschaften, Trockensubstanzgehalt, Viskosität, Molalität, pH-Wert, Ionenstärke und/oder Leitfähigkeit, bevorzugt sämtliche dieser Parameter.

In einer weiteren bevorzugten Ausführungsform der vorliegenden Erfindung umfassen die mikrobiologischen Eigenschaften des flüssigen Produktes in dem Standardproduktparameterset die Keimzahl, die Identifikation der Mikroorganismen, die Pathogenität, die Lebensfähigkeit und/oder den Entwicklungszustand der Mikroorganismen bevorzugt sämtliche dieser Parameter, insbesondere die Keimzahl und/oder die Identifikation der Keimart.

In einer weiteren bevorzugten Ausführungsform der vorliegenden Erfindung umfassen die mikrobiologischen Eigenschaften des flüssigen Produktes in dem spezifischen Produktparameterset, die Keimzahl, insbesondere Zellzahl, die Identifikation der Mikroorganismen, die Pathogenität, die Lebensfähigkeit (auch als Vitalität bezeichnet) und/oder den Entwicklungszustand der Mikroorganismen bevorzugt sämtliche dieser Parameter, insbesondere die Keimzahl und/oder die Identifikation der Keimart.

In bevorzugter Ausführungsform umfassen die mikrobiologischen Eigenschaften des flüssigen Produktes in dem Zielproduktparameterset die Keimzahl, die Identifikation der Mikroorganismen, die Pathogenität, die Lebensfähigkeit und/oder den Entwicklungszustand der Mikroorganismen, bevorzugt sämtliche dieser Parameter, insbesondere die Keimzahl und/oder die Identifikation der Keimart.

Bevorzugt umfassen die mikrobiologischen Eigenschaften des flüssigen Produktes in dem Produktparameterset, insbesondere dem Standardproduktparameterset, dem spezifischen Produktparameterset und dem Zielproduktparameterset, die Keimzahl, die Identifikation der Mikroorganismen, die Pathogenität, die Lebensfähigkeit und/oder den Entwicklungszustand der Mikroorganismen , bevorzugt sämtliche dieser Parameter, insbesondere die Keimzahl und/oder die Identifikation der Keimart.

Bevorzugt erfolgt in Schritt e) das Anwenden des in Schritt d) zugeordneten Standardverfahrensparametersets auf das in Schritt a) bereitgestellte flüssige Produkt bei einem zweiten Druckniveau im Rahmen eines Druckwechselverfahrens, bevorzugt eines kontinuierlichen Druckwechselverfahrens. Insbesondere erfolgt in Schritt e) die Durchführung eines Druckwechselverfahren, bevorzugt eines kontinuierlichen Druckwechselverfahrens, auf das in Schritt a) bereitgestellte flüssige Produkt bei den Verfahrensparametern des dem spezifischen Produktparameterset in Schritt d) zugeordneten Standardverfahrensparametersets. In einer bevorzugten Ausführungsform der vorliegenden Erfindung handelt es sich bei dem Standardverfahrensparameterset demnach um ein Set von Verfahrensparametern eines Druckwechselverfahrens, bevorzugt eines kontinuierlichen Druckwechselverfahrens.

In einer bevorzugten Ausführungsform der vorliegenden Erfindung liegt das zweite Druckniveau im Bereich von 2 bis 1500 bar, bevorzugt 2,5 bis 1250 bar, bevorzugt 3 bis 1000 bar, bevorzugt 4 bis 900 bar, bevorzugt 5 bis 800 bar, bevorzugt 10 bis 750 bar, bevorzugt 20 bis 700 bar, bevorzugt 30 bis 650 bar, bevorzugt 40 bis 600 bar, bevorzugt 50 bis 550 bar, bevorzugt 60 bis 500 bar, bevorzugt 70 bis 450 bar, bevorzugt 80 bis 400 bar, bevorzugt 90 bis 350 bar, bevorzugt 100 bis 300 bar, bevorzugt 150 bis 250 bar.

Bevorzugt liegt das zweite Druckniveau bei mindestens 2 bar, bevorzugt mindestens 2,5 bar, bevorzugt mindestens 3 bar, bevorzugt mindestens 3,5 bar, bevorzugt mindestens 4 bar, bevorzugt mindestens 4,5 bar, bevorzugt mindestens 5 bar, bevorzugt mindestens 6 bar, bevorzugt mindestens 7 bar, bevorzugt mindestens 7,5 bar, bevorzugt mindestens 8 bar, bevorzugt mindestens 9 bar, bevorzugt mindestens 10 bar, bevorzugt mindestens 15 bar, bevorzugt mindestens 20 bar, bevorzugt mindestens 30 bar, bevorzugt mindestens 40 bar, bevorzugt mindestens 50 bar, bevorzugt mindestens 100 bar, bevorzugt mindestens 200 bar, bevorzugt mindestens 300 bar, bevorzugt mindestens 500 bar.

In einer weiteren bevorzugten Ausführungsform der vorliegenden Erfindung liegt das zweite Druckniveau bei höchstens 1500 bar, bevorzugt höchstens 1250 bar, bevorzugt höchstens 1000 bar, bevorzugt höchstens 900 bar, bevorzugt höchstens 800 bar, bevorzugt höchstens 750 bar, bevorzugt höchstens 700 bar, bevorzugt höchstens 650 bar, bevorzugt höchstens 600 bar, bevorzugt höchstens 550 bar, bevorzugt höchstens 500 bar, bevorzugt höchstens 450 bar, bevorzugt höchstens 400 bar, bevorzugt höchstens 350 bar, bevorzugt höchstens 300 bar, bevorzugt höchstens 250 bar, bevorzugt höchstens 200 bar, bevorzugt höchstens 150 bar, bevorzugt höchstens 100 bar, bevorzugt höchstens 90 bar, bevorzugt höchstens 80 bar, bevorzugt höchstens 70 bar, bevorzugt höchstens 60 bar, bevorzugt höchstens 50 bar, bevorzugt höchstens 40 bar, bevorzugt höchstens 30 bar, bevorzugt höchstens 20 bar, bevorzugt höchstens 10 bar, bevorzugt höchstens 8 bar, bevorzugt höchstens 6 bar, bevorzugt höchstens 4 bar.

Erfindungsgemäß liegt das zweite Druckniveau über dem ersten Druckniveau.

In einer bevorzugten Ausführungsform der vorliegenden Erfindung liegt die Verfahrenstemperatur gemäß dem in Schritt d) dem in Schritt c) bestimmten spezifischen Produktparameterset zugeordneten Standardverfahrensparameterset im Bereich von 1 °C bis 55 °C, bevorzugt 1 °C bis 50 °C, bevorzugt 1 °C bis 45 °C, bevorzugt 1 °C bis 40 °C, bevorzugt 1 °C bis 35 °C, bevorzugt 1 °C bis 30 °C, bevorzugt 1 °C bis 25 °C, bevorzugt 1 °C bis 20 °C, bevorzugt 1 °C bis 15 °C, bevorzugt 1 °C bis 10 °C, bevorzugt 1 °C bis 9 °C, 1 °C bis 8 °C, bevorzugt 1 °C bis 7 °C, bevorzugt 1 °C bis 6 °C, bevorzugt 1 °C bis 5 °C, bevorzugt 1 °C bis 4 °C, bevorzugt 1 °C bis 3 °C.

In besonders bevorzugten Ausführungsform liegt die Verfahrenstemperatur gemäß dem in Schritt d) dem in Schritt c) bestimmten spezifischen Produktparameterset zugeordneten Standardverfahrensparameterset bei höchstens 50 °C, bevorzugt höchstens 45 °C, bevorzugt höchstens 40 °C, bevorzugt höchstens 35 °C, bevorzugt höchstens 30 °C, bevorzugt höchstens 25 °C, bevorzugt höchstens 20 °C, bevorzugt höchstens 15 °C, bevorzugt höchstens 10 °C, bevorzugt höchstens 5 °C.

In einer bevorzugten Ausführungsform der vorliegenden Erfindung liegt die Haltezeit gemäß dem in Schritt d) dem in Schritt c) bestimmten spezifischen Produktparameterset zugeordneten Standardverfahrensparameterset im Bereich von 5 s (s = Sekunde) bis 6 Stunden, insbesondere 5 s bis 3 Stunden, insbesondere 5 s bis 120 min, bevorzugt 5 s bis 90 min, bevorzugt 30 s bis 60 min, bevorzugt 1 bis 60 min, bevorzugt 1 bis 50 min, bevorzugt 1 bis 45 min, bevorzugt 5 bis 40 min, bevorzugt 5 bis 35 min, bevorzugt 5 bis 30 min, bevorzugt 5 bis 25 min, bevorzugt 5 bis 20 min, bevorzugt 5 bis 15 min.

In besonders bevorzugten Ausführungsform liegt die Haltezeit gemäß dem in Schritt d) dem in Schritt c) bestimmten spezifischen Produktparameterset zugeordneten Standardverfahrensparameterset bei höchstens 6 Stunden, insbesondere höchstens 3 Stunden, 120 min, bevorzugt höchstens 90 min, bevorzugt höchstens 60 min, bevorzugt höchstens 50 min, bevorzugt höchstens 45 min, bevorzugt höchstens 40 min, bevorzugt höchstens 30 min, bevorzugt höchstens 25 min, bevorzugt höchstens 20 min, bevorzugt höchstens 15 min, bevorzugt höchstens 10 min, bevorzugt höchstens 5 min.

In besonders bevorzugten Ausführungsform liegt die Haltezeit gemäß dem in Schritt d) dem in Schritt c) bestimmten spezifischen Produktparameterset zugeordneten Standardverfahrensparameterset bei mindestens 5 s, bevorzugt mindestens 10 s, bevorzugt mindestens 20 s, bevorzugt mindestens 30 s, bevorzugt mindestens 1 min, bevorzugt mindestens 2 min, bevorzugt mindestens 3 min, bevorzugt mindestens 4 min, bevorzugt mindestens 5 min, bevorzugt mindestens 10 min, bevorzugt mindestens 15 min, bevorzugt mindestens 20 min, bevorzugt mindestens 25 min, bevorzugt mindestens 30 min, bevorzugt mindestens 35 min, bevorzugt mindestens 40 min, bevorzugt mindestens 45 min, bevorzugt mindestens 50 min, bevorzugt mindestens 55 min, bevorzugt mindestens 60 min.

In bevorzugten Ausführungsform erfolgt die Druckentlastung gemäß dem in Schritt d) dem in Schritt c) bestimmten spezifischen Produktparameterset zugeordneten Standardverfahrensparameterset über eine Drossel, eine Düse oder ein Ventil.

Bevorzugt erfolgt die Druckentlastung gemäß dem in Schritt d) dem in Schritt c) bestimmten spezifischen Produktparameterset zugeordneten Standardverfahrensparameterset mit einer Entspannungsgeschwindigkeit von 0,1 bis 2000 bar/s, bevorzugt 0,1 bis 1500 bar/s, bevorzugt 0,1 bis 1000 bar/s, bevorzugt 0,5 bis 1000 bar/s, bevorzugt 0,5 bis 500 bar/s, bevorzugt 1 bis 500 bar/s, bevorzugt 1 bis 400 bar/s, bevorzugt 1 bis 300 bar/s, bevorzugt 1 bis 200 bar/s, bevorzugt 1 bis 100 bar/s, bevorzugt 1,5 bis 50 bar/s, bevorzugt 2 bis 20 bar/s, bevorzugt 2 bis 15 bar/s, bevorzugt 2 bis 10 bar/s, bevorzugt 2 bis 8 bar/s, bevorzugt 2 bis 6 bar/s.

Besonders bevorzugt erfolgt die Druckentlastung gemäß dem in Schritt d) dem in Schritt c) bestimmten spezifischen Produktparameterset zugeordneten Standardverfahrensparameterset mit einer Entspannungsgeschwindigkeit von mindestens 0,1 bar/s, bevorzugt mindestens 0,5 bar/s, bevorzugt mindestens 1 bar/s, bevorzugt mindestens 5 bar/s, bevorzugt mindestens 10 bar/s, bevorzugt mindestens 50 bar/s, bevorzugt mindestens 100 bar/s, bevorzugt mindestens 200 bar/s, bevorzugt mindestens 500 bar/s.

In einer bevorzugten Ausführungsform der vorliegenden Erfindung erfolgt das Anwenden des in Schritt d) zugeordneten Standardverfahrensparametersets auf das bereitgestellte flüssige Produkt bei einem zweiten Druckniveau in Anwesenheit eines Prozessgases, bevorzugt in Anwesenheit von N₂, CO₂, N₂O, He, Ar, Kr, Xe, Ne oder Mischungen davon. Besonders bevorzugt handelt es sich bei dem Prozessgas um ein inertes Gas, bevorzugt um ein Edelgas.

In einer bevorzugten Ausführungsform der vorliegenden Erfindung wird das Prozessgas, bevorzugt N₂, CO₂, N₂O, He, Ar, Kr, Xe, Ne oder Mischungen davon, mit dem zu konservierenden flüssigen Produkt vermischt, bevorzugt solange vermischt bis sich bei dem vorherrschenden Druckniveau ein Sättigungsgleichgewicht des Prozessgases, bevorzugt von N₂, CO₂, N₂O, He, Ar, Kr, Xe, Ne oder Mischungen davon, zwischen der Gas- und der Flüssigphase eingestellt hat.

In einer bevorzugten Ausführungsform der vorliegenden Erfindung findet nach Schritt e) und vor Schritt f) eine Schaumzerstörung statt. Bevorzugt findet nach Schritt e) und vor Schritt f) eine Schaumzerstörung und eine Durchmischung des flüssigen Produktes statt. Besonders bevorzugt erfolgt die Schaumzerstörung mittels einer Ultraschallsonde, bevorzugt mittels einer integrierten Ultraschallsonde. Durch die gemäß dieser bevorzugten Ausführungsform durchgeführte Schaumzerstörung wird eine durch den gegebenenfalls nach Schritt e) gebildeten Schaum auftretende Phasentrennung und/oder Flotation von Bestandteilen des zu konservierenden flüssigen Produktes vermieden.

Sofern in Schritt g) eine Nicht-Übereinstimmung des weiteren spezifischen Produktparametersets mit dem Zielproduktparameterset festgestellt wird, werden erfindungsgemäß die Schritte d) bis g) wiederholt bis eine Übereinstimmung des jeweils in Schritt f) bestimmten Produktparametersets mit dem Zielproduktparameterset vorliegt, wobei jeweils in Schritt d) das jeweils zuvor bestimmte jeweils weitere spezifische Produktparameterset einem übereinstimmenden, oder wenn nicht vorhanden, dem die geringste Abweichung aufweisenden Standardverfahrensparameterset zugeordnet wird, das in der gemäß Schritt b) bereitgestellten Datenbank enthalten ist. In bevorzugter Ausführungsform werden die Schritte d) bis g) mindestens zwei Mal, bevorzugt mindestens drei Mal, bevorzugt mindestens vier Mal, bevorzugt mindestens fünf Mal, wiederholt.

Bevorzugt beträgt die Abweichung keiner der Parameter des weiteren spezifischen Produktparametersets vom Zielproduktparameterset in Schritt g) mehr als 10%, bevorzugt mehr als 9%, bevorzugt mehr als 8%, bevorzugt mehr als 7%, bevorzugt mehr als 6%, bevorzugt mehr als 5%, bevorzugt mehr als 4%, bevorzugt mehr als 3%, bevorzugt mehr als 2%, bevorzugt mehr als 1,5%, bevorzugt mehr als 1%, bevorzugt mehr als 0,5%, bevorzugt mehr als 0,4%, bevorzugt mehr als 0,3%, bevorzugt mehr als 0,2%, bevorzugt mehr als 0,1 %.

In besonders bevorzugter Ausführungsform der vorliegenden Erfindung erfolgt das erfindungsgemäße Verfahren, bevorzugt die Schritte c) bis f), besonders bevorzugt Schritt e), unter Ausschluss von Sauerstoff. Besonders bevorzugt liegt die Sauerstoffkonzentration im erfindungsgemäßen Verfahren, während der Schritte c) bis f), besonders bevorzugt während Schritt e), bei höchstens 5%, bevorzugt höchstens 4%, bevorzugt höchstens 3%, bevorzugt höchstens 2%, bevorzugt höchstens 1%, bevorzugt höchstens 0,8%, bevorzugt höchstens 0,6%, bevorzugt höchstens 0,4%, bevorzugt höchstens 0,2%, bevorzugt höchstens 0,1%, bevorzugt höchstens 0,05%.

Die vorliegende Erfindung offenbart zudem ein Verfahren zur Vorhersage optimierter Standardverfahrensparameter zur kontinuierlichen, bevorzugt nicht-thermischen, Konservierung flüssiger Produkte, umfassend die Schritte:
i) Bereitstellen eines zu konservierenden flüssigen Produktes,
ii) Bereitstellen einer Datenbank, umfassend eine Vielzahl von Standardproduktparametersets zu physikalisch-chemischen und mikrobiologischen Eigenschaften flüssiger Standardprodukte, wobei jeweils ein Standardproduktparameterset mit einem dazugehörigen vorbestimmten Standardverfahrensparameterset und einem Zielproduktparameterset verknüpft ist,
iii) Bestimmen eines spezifischen Produktparametersets des in Schritt i) bereitgestellten flüssigen Produktes durch Messen der physikalisch-chemischen und mikrobiologischen Eigenschaften des flüssigen Produktes bei einem ersten Druckniveau,
iv) Zuordnen des in Schritt iii) bestimmten spezifischen Produktparametersets zu dem zugehörigen in der gemäß Schritt ii) bereitgestellten Datenbank enthaltenden Standardverfahrensparameterset,
v) Anwenden der Verfahrensparameter des in Schritt iv) zugeordneten Standardverfahrensparametersets auf das in Schritt i) bereitgestellte flüssige Produkt bei einem zweiten Druckniveau,
vi) Bestimmen eines weiteren spezifischen Produktparametersets des in Schritt v) erhaltenen flüssigen Produktes durch Messen der physikalisch-chemischen und mikrobiologischen Eigenschaften des flüssigen Produktes bei dem ersten Druckniveau,
vii) Vergleichen des weiteren spezifischen Produktparametersets mit dem Zielproduktparameterset, wobei bei deren Übereinstimmung die optimierten Standardverfahrensparameter ermittelt sind, wobei bei Nicht-Übereinstimmung des weiteren spezifischen Produktparametersets mit dem Zielproduktparameterset die Schritte iv) bis vii) wiederholt werden bis Übereinstimmung des weiteren spezifischen Produktparametersets mit dem Zielproduktparameterset erreicht wird und wobei jeweils in Schritt iv) dem jeweils zuvor in Schritt vi) bestimmten jeweils weiteren spezifischen Produktparameterset ein zugehöriges in der gemäß Schritt ii) bereitgestellten Datenbank enthaltenes Standardverfahrensparameterset zugeordnet wird und
viii) Erhalten eines optimierten Standardverfahrensparametersets für die Konservierung des in Schritt i) bereitgestellten flüssigen Produktes.

Sofern bei erstmaliger Durchführung der Verfahrensschritte iii) bis vi) in Schritt vii) eine Übereinstimmung des weiteren spezifischen Produktparametersets mit dem Zielproduktparameterset erkannt wird, entspricht das in Verfahrensschritt viii) erhaltene optimierte Standardverfahrensparameterset dem bereits in der Datenbank vorhandenen und in Schritt vi) angewandten übereinstimmenden oder die geringste Abweichung aufweisenden Standardverfahrensparameterset für das in Verfahrensschritt iii) bestimmte spezifische Produktparameterset. Sofern dagegen eine Nicht-Übereinstimmung in Schritt vii) festgestellt wird, und demgemäß die Verfahrensschritte iv) bis vii) wiederholt wurden, bis eine Übereinstimmung des weiteren spezifischen Produktparametersets mit dem Zielproduktparameterset erzielt wurde, wird in Verfahrensschritt viii) rechnerisch ein optimiertes Standardverfahrensparameterset erhalten, dessen Parameter sich durch Kenntnis und Auswertung der in den Verfahrensschritten ii) bis vii) durchgeführten Verfahrensschritte ergeben.

Durch die Abfolge der Verfahrensschritte iii) zu viii) ergibt sich eine technische Lehre in Form eines ermittelten Verfahrensparametersets, wie ein zu konservierendes flüssiges Produkt, das durch ein spezifisches Produktparameterset gekennzeichnet ist, zu konservieren ist, um ein durch ein Zielproduktparameterset gekennzeichnetes Zielprodukt zu erhalten. Das Verfahren stellt demgemäß durch die Durchführung der Verfahrensschritte i) bis viii) optimierte Standardverfahrensparameter für die Bereitstellung konservierter flüssiger Produkte bereit.

In einem weiteren Verfahrensschritt ix) kann das in Schritt viii) erhaltene optimierte Standardverfahrensparameterset mit dem dazugehörigen spezifischen Produktparameterset gemäß Verfahrensschritt ii) und dem über das in Verfahrensschritt iv) zugeordnete Standardverfahrensparameterset zugeordnete Zielproduktparameterset in die in Schritt ii) bereitgestellte Datenbank eingepflegt werden, vorzugsweise in eine Online- oder Offline-Datenbank. Auf diese Weise wird vorteilhafterweise eine mit der Anzahl der durchgeführten Verfahren zur Vorhersage optimierter Standardverfahrensparameter zur kontinuierlichen nicht-thermischen Konservierung flüssiger Produkte wachsende Genauigkeit des Verfahrens erzielt.

Insbesondere kann das Verfahren daher als selbstlernendes, insbesondere maschinell selbstlernendes, Verfahren ausgebildet sein.

Im Rahmen dieser Verfahrensweise wird ein Verfahren offenbart, das unter Nutzung von maschinellem Lernen, insbesondere einem maschinellen Lernmodel, und mindestens einer programmierbaren Steuereinheit durchgeführt wird. Insbesondere kann vorgesehen sein, durch Durchführung der Verfahrensschritte i) bis viii), insbesondere ii) bis viii), insbesondere iii) bis viii), ein angepasstes, insbesondere optimiertes Standardverfahrensparameterset für ein in der Datenbank bereits vorhandenes oder für ein im Rahmen des maschinellen Lernen neu erstelltes Standardproduktparameterset und ein damit verknüpftes Zielproduktparameterset bereitzustellen, indem das maschinelle Lernmodell durch Durchführung der genannten Verfahrensschritte Zusammenhänge zwischen physikalisch-chemischen und mikrobiologischen Eigenschaften flüssiger Produkte, angewendeter Standardverfahrensparameter und erhaltener Produktparameter erkennt und nutzt, um ein angepasstes, optimiertes Standardverfahrensparameterset zu erstellen, dessen Anwendung für ein gegebenes flüssiges Produkt mit einem definierten spezifischen Produktparameterset in effizienter Weise ein Produkt herstellbar macht, das die Parameter des Zielproduktparametersets aufweist. Insbesondere kann durch die selbstlernende Verfahrensweise erreicht werden, in der Datenbank eine zunehmende Anzahl an weiteren Standardproduktparametersets bereitzustellen, die möglichst identisch oder weitgehend identisch zu den spezifischen Produktparametersets zu konservierender flüssiger Produkte sind und für die dazugehörige ebenfalls durch maschinelles Lernen entwickelte Standardverfahrensparametersets mit zugehörigem Zielproduktparametersets vorliegen. In einer Variante ist vorgesehen, dass im Rahmen des Durchlaufens der Verfahrensabfolgen i) bis viii), insbesondere ii) bis viii), insbesondere iii) bis viii), während des maschinell selbstlernenden Verfahrens weitere Standardproduktparametersets und dazugehörige Standardverfahrensparametersets mit damit verknüpften Zielparametersets und/oder bereits in der Datenbank vorhandene Standardproduktparametersets mit damit verknüpften Zielproduktparametersets und optimierte zu diesen Standardproduktparametersets gehörige Standardverfahrensparametersets erstellt werden. Das vorgesehene maschinelle selbstlernende Verfahren erhöht daher einerseits die Anzahl vorliegender Standardproduktparametersets und dazugehöriger Standardverfahrensparametersets in der Datenbank und erhöht so die Wahrscheinlichkeit, eine möglichst gute Übereinstimmung zu spezifischen Produktparametersets des zu konservierenden flüssigen Produktes zu erreichen und führt andererseits zu optimierten Standardverfahrensparametersets, insofern als dass Produkte, gekennzeichnet durch damit verbundene spezifische Produktparameter in effizienterer Weise zu Produkten mit Zielproduktparametern überführt werden können. Dieses Vorgehen ermöglicht eine effizientere, schnellere und kostengünstigere Konservierung von flüssigen Produkten.

Die Verfahrensweise zur Vorhersage optimierter Standardverfahrensparameter kann in einer Trainingsphase, Validierungsphase und Testphase, insbesondere Trainingsphase und Testphase durchgeführt werden. In einer Variante ist vorgesehen, die Trainingsphase von der Testphase zu trennen.

In einer Variante ist vorgesehen, in einer Trainingsphase oder Testphase des erfindungsgemäßen Verfahrens dem maschinellen Lernmodell Trainingsstandardproduktparametersets oder spezifische Produktparametersets zu physikalisch-chemischen und mikrobiologischen Eigenschaften flüssiger Produkte mit dazugehörigen vorbestimmten Standardverfahrensparametersets und dazugehörigen Zielproduktparametersets zuzuführen, wobei das Modell geeignet ist, bei Eingabe von Trainingsstandardproduktparametersets oder bestimmten spezifischen Produktparametersets eines untersuchten flüssigen Produktes, die von in einer Datenbank vorhandenen Standardproduktparametersets abweichen, ein in der Datenbank vorhandenes möglichst weitgehend übereinstimmendes Standardproduktparameterset mit einem dazugehörigen vorbestimmten Standardverfahrensparameterset und einem Zielproduktparameterset auszuwählen, so dass bei Anwendung des ausgewählten Standardverfahrensparametersets am schnellsten und effizientesten ein Produkt erhalten wird, das das gewünschte Zielproduktparameterset aufweist. Das durch das maschinelle Lernen ermöglichte Erkennen von Zusammenhängen zwischen spezifischen Produktparametersets, Standardproduktparametersets, eingesetzten Standardverfahrensparametern und erhaltenen spezifischen Produktparametern stellteine besonders effiziente Verfahrensweise bereit.

Es kann vorgesehen sein, die physikalisch-chemischen und mikrobiologischen Eigenschaften, welche ein Standardproduktparameterset charakterisieren, hinsichtlich der Zuordnung dazugehöriger bestimmter Standardverfahrensparameter zu gewichten. Insbesondere kann einzelnen Eigenschaften von Produkten, insbesondere mikrobiologischen Eigenschaften, insbesondere der Keimzahl und/oder Identifikation der Mikroorganismen, eine besonders hohe Gewichtung für die Bestimmung entsprechender einzusetzender Standardverfahrensparameter zukommen.

Das Verfahren zur Vorhersage optimierter Standardverfahrensparameter zur kontinuierlichen vorzugsweise nicht-thermischen, Konservierung flüssiger Produkte kann ein computerimplementiertes Verfahren sein, insbesondere ein automatisiertes computerimplementiertes Verfahren zur Vorhersage optimierter Standardverfahrensparameter zur kontinuierlichen nicht-thermischen Konservierung flüssiger Produkte.

Insbesondere werden die Verfahrensschritte ii), iv), vii), viii) sowie optional ix) mittels maschinellen Lernens, insbesondere mittels mindestens eines künstlichen neuronalen Netzwerkes (KNN; Englisch: ANN), durchgeführt, insbesondere mittels mindestens eines künstlichen neuronalen Netzwerkes, eingesetzt in einer programmierbaren Steuereinrichtung mit einem in den Speicher der programmierbaren Steuereinrichtung geladenen Computerprogrammprodukt. Insbesondere werden die Verfahrensschritte, insbesondere die Verfahrensschritte ii), iv), vii), viii) sowie optional ix) unter Einsatz maschinellen Lernens, insbesondere eines maschinellen Lernmodells, und mindestens einer programmierbaren Steuereinheit durchgeführt.

Das Verfahren zur Vorhersage optimierter Standardverfahrensparameter zur kontinuierlichen Herstellung, vorzugsweise nicht-thermisch, konservierter flüssiger Produkte kann in einer erfindungsgemäßen Vorrichtung durchgeführt werden, umfassend mindestens ein Gefäß, bevorzugt mindestens einen Reaktor, insbesondere eines Druckwechselreaktor, mindestens eine Messeinrichtung, und mindestens eine programmierbare Steuereinrichtung mit einem in den Speicher der programmierbaren Steuereinrichtung geladenen Computerprogrammprodukt, umfassend eine in Schritt ii) bereitgestellte Datenbank und Programmcodemittel zur Durchführung des Verfahrens zur kontinuierlichen Herstellung, vorzugsweise nicht-thermisch, konservierter flüssiger Produkte umfassend die Schritte i) bis viii), sowie optional ix).

In einer Variante handelt es sich bei der in Schritt ii) bereitgestellten Datenbank um eine auf einem Server hinterlegte Datenbank. Besonders bevorzugt handelt es sich bei der in Schritt ii) bereitgestellten Datenbank um eine auf einem Server hinterlegte Datenbank, auf die über ein Netzwerk zugegriffen werden kann. Bevorzugt ist die Datenbank eine Online-Datenbank.

In einer Variante kann diese Verfahrensweise online und/oder Cloud-gestützt durchgeführt werden, insbesondere unter Nutzung mindestens einer Datenbank und mindestens einer programmierbaren Steuereinheit, die zumindest teilweise auf einem, gegebenenfalls externen, Cloud-basierten und einem Online-Zugriff ermöglichenden Server oder Serversystem lokalisiert sind.

Erfindungsgemäß bevorzugt ermöglicht es insbesondere Eine online-verfügbare Datenbank kann es ermöglichen, kontinuierlich neue Informationen, insbesondere spezifische Produktparametersets, Standardverfahrensparametersets, Standardproduktparametersets und/oder gegebenenfalls Zielproduktparametersets in die Datenbank aufzunehmen.

In einer weiteren Variante handelt es sich bei der Datenbank um eine auf einem Datenträger, insbesondere einem lokalen Datenträger, hinterlegte Datenbank. Besonders bevorzugt ist die in Schritt ii) bereitgestellte Datenbank im Speicher einer programmierbaren Steuereinrichtung einer Vorrichtung zur kontinuierlichen, vorzugsweise nicht-thermischen, Konservierung flüssiger Produkte hinterlegt. Bevorzugt ist die Datenbank eine Offline-Datenbank.

In einer Variante kann das zu konservierende Produkt vor Durchführung des Verfahrensschritts iii) homogenisiert werden und/oder die Partikelgröße verändert, insbesondere verkleinert werden.

In einer bevorzugten Ausführungsform gelten die im Zusammenhang mit dem Verfahren zur kontinuierlichen Herstellung nicht-thermisch konservierter flüssiger Produkte getroffenen Aussagen und Ausführungsformen mutatis mutandis auch für das Verfahren zur Vorhersage optimierter Verfahrensparameter zur kontinuierlichen nicht-thermischen Konservierung flüssiger Produkte und umgekehrt.

Ferner betrifft die vorliegende Erfindung ein Computerprogrammprodukt, welches direkt in einen Speicher einer programmierbaren Steuereinrichtung einer Vorrichtung zur kontinuierlichen nicht-thermischen Konservierung flüssiger Produkte ladbar ist, umfassend eine Datenbank und Programmcodemittel zur Durchführung des Verfahrens zur kontinuierlichen Herstellung nicht-thermisch konservierter flüssiger Produkte umfassend die Schritte a) bis g).

Die vorliegende Erfindung betrifft zudem einen computerlesbaren Datenträger, insbesondere einen optischen Datenträger, beispielsweise eine CD, DVD, Blue-Ray-Disk oder HD DVD, einen Halbleiterdatenträger, beispielsweise einen Flash-Speicher oder ein Solid-State-Laufwerk, oder einen magnetischen Datenträger, beispielsweise eine Diskette oder ein Festplattenlaufwerk, umfassend ein erfindungsgemäßes Computerprogrammprodukt, das heißt ein Computerprogrammprodukt, welches direkt in einen Speicher einer programmierbaren Steuereinrichtung einer Vorrichtung zur kontinuierlichen nicht-thermischen Konservierung flüssiger Produkte ladbar ist, sowie eine Datenbank und Programmcodemittel zur Durchführung des Verfahrens zur kontinuierlichen Herstellung nicht-thermisch konservierter flüssiger Produkte umfassend die Schritte a) bis g).

In bevorzugter Ausführungsform kann der computerlesbare Datenträger ein USB-Massenspeicher, ein Netzwerk-basierter Zentralspeicher, insbesondere NAS-System, ein mobiles CD-Laufwerk, eine mobile Festplatte oder ein Cloud-basierter Speicher sein.

Die vorliegende Erfindung betrifft auch eine Vorrichtung zur Durchführung des erfindungsgemäßen Verfahrens zur kontinuierlichen Herstellung nicht-thermisch konservierter flüssiger Produkte. Insbesondere betrifft die vorliegende Erfindung eine Vorrichtung zur Durchführung des erfindungsgemäßen Verfahrens zur kontinuierlichen Herstellung nicht-thermisch konservierter flüssiger Produkte, umfassend mindestens ein Gefäß, bevorzugt mindestens einen Reaktor, mindestens eine Messeinrichtung, und mindestens eine programmierbare Steuereinrichtung mit einem erfindungsgemäßen Computerprogrammprodukt.

Unter dem Begriff "flüssiges Produkt" wird im Zusammenhang mit der vorliegenden Erfindung ein Produkt, insbesondere biogenes Produkt, verstanden, das in einem fließfähigen Zustand vorliegt. Dabei kann es sich bei dem "flüssigen Produkt" im Sinne der vorliegenden Erfindung beispielsweise um eine Lösung, Suspension oder Dispersion handeln. Der Begriff umfasst sowohl hochviskose, insbesondere dick- oder zähflüssige Produkte als auch niedrigviskose, insbesondere dünnflüssige Produkte.

Im Zusammenhang mit der vorliegenden Erfindung wird unter dem Begriff "nicht-thermisch konservierte flüssige Produkte" verstanden, dass konservierte flüssige Produkte bereitgestellt werden, die bei einer Temperatur von höchstens 50° C, bevorzugt höchstens 45° C, bevorzugt höchstens 40° C, bevorzugt höchstens 35° C, bevorzugt höchstens 30° C, bevorzugt höchstens 25° C, bevorzugt höchstens 20° C, bevorzugt höchstens 15° C, bevorzugt höchstens 10° C, bevorzugt höchstens 5° C, konserviert wurden.

Im Zusammenhang mit der vorliegenden Erfindung wird vorzugsweise unter dem Begriff der "Konservierung" oder des "Konservierens" eine Reduktion der Keimzahl verstanden.

Vorzugsweise kann eine Konservierung eine Pasteurisierung oder eine Sterilisierung sein.

Die in bevorzugter Ausführungsform vorgesehene Verfahrensweise, nicht-thermisch flüssige Produkte zu konservieren, schließt in einer Ausführungsform nicht aus, dass im Rahmen des erfindungsgemäßen Verfahrens zwischen den erfindungsgemäß vorgesehenen Verfahrensschritten a), b), c), d), e), f) und g), insbesondere vor Schritt e) im Rahmen eines Verfahrensschrittes zur Auskeimung von Sporen gegebenenfalls höhere Temperaturen, insbesondere über 50° C, eingesetzt werden können.

Unter dem Begriff "Parameter" wird im Zusammenhang mit der vorliegenden Erfindung eine messbare, insbesondere quantitativ bestimmbare, physikalische Größe verstanden.

Im Zusammenhang mit der vorliegenden Erfindung wird unter dem Begriff "Druckwechselverfahren" ein Verfahren verstanden, bei dem ein flüssiges Produkt zunächst bei einem definierten Druck und einer definierten Temperatur für eine bestimmte Zeit (Retentionszeit) mit einem Gas, bevorzugt mit einem chemisch inerten Gas, vermischt und angereichert wird. Dabei diffundiert das in dem flüssigen Produkt gelöste Gas, bevorzugt chemisch inerte Gas, durch die Zellmembranen der in dem Produkt enthaltenen Mikroorganismen. Durch einen anschließenden abrupten, möglichst schnellen und großen Druckabfall kommt es zur schlagartigen Expansion des gelösten Gases, was zu einer irreversiblen Schädigung der in dem Produkt enthaltenen Mikroorganismen führt.

Unter dem Begriff "Standardproduktparameterset" wird im Zusammenhang mit der vorliegenden Erfindung eine Gruppe von vorbestimmten Parametern, insbesondere Messparametern verstanden, welche die physikalisch-chemischen und mikrobiologischen Eigenschaften eines Standardproduktes, das heißt ein vorbekanntes Produkt, charakterisieren.

Unter dem Begriff "Standardverfahrensparameterset" wird eine Gruppe von vorbestimmten Verfahrensparametern, insbesondere Verfahrensparameter eines Druckwechselverfahrens, verstanden, wobei die Anwendung der Verfahrensparameter des Standardverfahrensparametersets auf ein diesen Parametern zugeordnetes bestimmtes Standardprodukt, das durch ein bestimmtes Standardproduktparameterset gekennzeichnet ist, zum Erhalt eines Zielprodukts mit den Parametern des Zielproduktparametersets führt.

Unter "Zielproduktparameterset" wird im Zusammenhang mit der vorliegenden Erfindung eine Gruppe von vorbestimmten Parametern, insbesondere Messparametern, verstanden, welche die physikalisch-chemischen und mikrobiologischen Eigenschaften eines Zielproduktes, das heißt eines erwünschten herzustellendes Produktes, insbesondere ein vorbekanntes konserviertes flüssiges Produkt, charakterisieren. Die einzelnen Parameter eines solchen "Zielproduktparameterset" können sich gemäß einer besonders bevorzugten Ausführungsform an den in einem entsprechenden Land für konservierte flüssige Produkte geltenden gesetzlichen Vorschriften orientieren, insbesondere diesen entsprechen. So gelten beispielsweise innerhalb der europäischen Union für die mikrobiologische Belastung von Lebensmitteln die Verordnungen (EG) Nr. 1441/2007 und (EG) Nr. 2073/2005.

In einer besonders bevorzugten Ausführungsform zeichnet sich ein Zielproduktparameterset dadurch aus, dass der Produktparameter die Keimzahl ist und die Keimzahl geringer ist als im bereitgestellten konservierten flüssigen Produkt, insbesondere geringer als die Keimzahl des spezifischen Produktparametersets des in Verfahrensschritt a) bereitgestellten zu konservierenden flüssigen Produktes.

In einer besonders bevorzugten Ausführungsform entspricht das Zielproduktparameterset dem spezifischen Produktparameterset des in Verfahrensschritt a) bereitgestellten flüssigen Produktes mit Ausnahme einer reduzierten Keimzahl im Zielproduktparameterset, insbesondere einer auf null reduzierten Keimzahl im Zielproduktparameterset.

In besonders bevorzugter Ausführungsform entspricht das Zielproduktparameterset dem spezifischen Produktparameterset des in Verfahrensschritt a) bereitgestellten flüssigen Produktes mit Ausnahme einer reduzierten Keimzahl im Zielproduktparameterset, insbesondere einer auf 0 reduzierten Keimzahl im Zielproduktparameterset, wobei sämtliche andere Produktparameter unverändert bleiben.

Unter einem "spezifischen Produktparameterset" wird im Zusammenhang mit der vorliegenden Erfindung eine Gruppe von im erfindungsgemäßen Verfahren bestimmten Parametern, insbesondere Messparametern, verstanden, welche die physikalisch-chemischen und mikrobiologischen Eigenschaften eines zu konservierenden Produktes charakterisieren. Erfindungsgemäß werden mindestens zwei, bevorzugt genau zwei, spezifische Produktparametersets erhalten. Die Bestimmung eines (ersten) spezifischen Produktparametersets erfolgt erfindungsgemäß in Schritt c). Die Bestimmung eines weiteren spezifischen Produktparametersets erfolgt in Schritt f) und damit nach Anwendung der Verfahrensparameter des in Schritt d) zugeordneten Standardverfahrensparametersets auf das bereitgestellte flüssige Produkt und dient insbesondere zur Kontrolle, ob nach Anwendung der Verfahrensparameter des Standardverfahrensparametersets auf das zu konservierende Produkt ein Produkt erhalten wurde, dessen spezifische Produktparameter mit denen des Zielproduktparametersets Übereinstimmung aufweisen.

Unter dem Begriff "Übereinstimmung" wird im Zusammenhang mit der vorliegenden Erfindung die Identität von Eigenschaften, insbesondere von Parametern, insbesondere Messparametern, verstanden. Eine "Übereinstimmung" kann erfindungsgemäß auch dann bestehen, wenn die miteinander verglichenen Eigenschaften, insbesondere Parameter, insbesondere Messparameter, geringfügig voneinander abweichen, das heißt keine vollständige Identität vorliegt.

Eine Übereinstimmung der miteinander verglichenen Eigenschaften, insbesondere Parameter, insbesondere Messparameter, kann im Zusammenhang mit der vorliegenden Erfindung also dann vorliegen, wenn die, insbesondere alle, Parameter des spezifischen Produktparametersets identisch zu denen des Standardproduktparametersets beziehungsweise Zielproduktparametersets sind oder wenn geringfügige Abweichungen der, insbesondere aller, Parameter vorliegen. Die gegebenenfalls geringfügig voneinander abweichenden Parameter der zu vergleichenden Parametersets sind in bevorzugter Ausführungsform der vorliegenden Erfindung dadurch gekennzeichnet, dass sie geringfügige quantitativ identifizierbare Abweichungen zueinander aufweisen. In Bezug auf Parameter, die nicht quantitativ, sondern qualitativ bestimmt werden, insbesondere zum Beispiel die Identifikation der Mikroorganismen, kann ein geringfügig abweichender Parameter dadurch gekennzeichnet sein, dass die Mikroorganismen hinsichtlich ihrer taxonomischen Einordnung als ähnlich zu klassifizieren sind.

In bevorzugter Ausführungsform sind derartige quantitativ identifizierbare Abweichungen in Bezug auf die mikrobiologischen Eigenschaften der Produkte, insbesondere Keimzahlen, Identifikation der Mikroorganismen, Pathogenität, Lebensfähigkeit und/oder Entwicklungszustand des Mikroorganismus Abweichungen, die anhand der Anzahl der jeweils diese Eigenschaft aufweisenden Organismen charakterisiert werden können, beispielsweise die Anzahl pathogener Mikroorganismen, die Anzahl lebensfähiger Keime, die Anzahl von Sporen oder die Anzahl von Mikroorganismen bestimmter Taxonomie. In Bezug auf die physikalisch-chemischen Eigenschaften der Produkte, wie die quantitative und qualitative chemische Zusammensetzung, die enzymatische Aktivität, die Dichte, die Partikelgröße, rheologische Eigenschaften, Viskosität, Modalität, Ionenstärke und/oder Leitfähigkeit sind quantitativ identifizierbare Abweichungen durch zahlenmäßige Abweichungen der jeweilig erfassten chemisch-physikalischen Größen, gegebenenfalls auch der An- oder Abwesenheit bestimmter Substanzen, gegeben.

Gemäß der vorliegenden Erfindung liegt eine "Übereinstimmung", insbesondere Identität oder Übereinstimmung mit geringfügigen Abweichungen, in einer besonders bevorzugten Ausführungsform dann vor, wenn beim Vergleich der Produktparameter des ermittelten spezifischen Produktparametersets mit den Standardproduktparametern des Standardproduktparametersets in Schritt d) beziehungsweise beim Vergleich der Produktparameter des weiteres spezifischen Produktparametersets mit den Zielproduktparametern des Zielproduktparametersets in Schritt g) keiner der Parameter, insbesondere Messparameter, des spezifischen Produktparametersets beziehungsweise des weiteren spezifischen Produktparametersets von den entsprechenden Parametern des Standardproduktparametersets beziehungsweise des Zielproduktparametersets um mehr als 10%, bevorzugt mehr als 9%, bevorzugt mehr als 8%, bevorzugt mehr als 7%, bevorzugt mehr als 6%, bevorzugt mehr als 5%, bevorzugt mehr als 4%, bevorzugt mehr als 3%, bevorzugt mehr als 2%, bevorzugt mehr als 1,5%, bevorzugt mehr als 1%, bevorzugt mehr als 0,5%, bevorzugt mehr als 0,4%, bevorzugt mehr als 0,3%, bevorzugt mehr als 0,2%, bevorzugt mehr als 0,1 %, abweicht.

In Bezug auf qualitativ zu bestimmende Eigenschaften, insbesondere Parameter, insbesondere die Identifikation der Mikroorganismen, liegt eine Übereinstimmung, insbesondere Identität oder Übereinstimmung mit geringfügigen Abweichungen in einer besonders bevorzugten Ausführungsform dann vor, wenn der qualitative Parameter, insbesondere die Identifikation der Mikroorganismen, des spezifischen Produktparametersets oder des weiteren spezifischen Produktparametersets identisch zu dem des Zielproduktparametersets ist oder einer ähnlichen, insbesondere nahestehenden, taxonomischen Einheit angehört.

Entsprechend liegt erfindungsgemäß eine "Nicht-Übereinstimmung" vor, wenn keine Übereinstimmung in Sinne der vorliegenden Erfindung festgestellt werden kann.

Die Bezeichnung "geringste Abweichung" wird im Zusammenhang mit der vorliegenden Erfindung insbesondere verwendet, um dasjenige vorbestimmte Parameterset, insbesondere Standardproduktparameterset, in der Datenbank zu bezeichnen, das keine Übereinstimmung zu dem spezifischen Produktparameterset aufweist, aber bei dem die einzelnen miteinander verglichenen Parameter, insbesondere in quantitativer Hinsicht an wenigsten von den konkret bestimmten Parametern des Produktparametersets, insbesondere des ersten beziehungsweise des weiteren spezifischen Produktparametersets, abweichen.

Im Zusammenhang mit der vorliegenden Erfindung wird unter dem Begriff "Computerprogrammprodukt" ein eine Folge von maschinenlesbaren, insbesondere computerlesbaren, Befehlen (Programmcodemitteln) umfassendes Produkt verstanden, bei dessen Ausführung eine geeignete Hardware dazu veranlasst wird, ein bestimmtes Verfahren durchzuführen bzw. ein bestimmtes Verfahren zu steuern oder zu regulieren. Dabei kann das erfindungsgemäße "Computerprogrammprodukt" zusätzlich eine Datenbank umfassen und/oder den Zugriff auf eine Online-Datenbank ermöglichen. Das "Computerprogrammprodukt" gemäß der vorliegenden Erfindung kann auf einem physikalischen Trägermaterial, insbesondere einem computerlesbaren Datenträger, gespeichert vorliegen.

Im Zusammenhang mit der vorliegenden Erfindung wird unter einer programmierbaren Steuereinrichtung insbesondere eine einen Mikroprozessor aufweisende Einrichtung verstanden. Die programmierbare Steuereinrichtung kann in bevorzugter Ausführung mindestens einen Speicher aufweisen.

Unter "Programmcodemittel" werden erfindungsgemäß jegliche maschinenlesbare, insbesondere computerlesbare Befehlsfolgen, insbesondere Quellcode, Zwischencode oder Maschinencode, verstanden, die umgewandelt oder direkt ausgelesen dazu geeignet sind, eine die Programmcodemittel ausgelesene Hardware dazu zu veranlassen, die in den Programmcodemitteln codierten Anweisungen auszuführen.

Im Zusammenhang mit der vorliegenden Erfindung wird unter der "Keimzahl" die Zahl der Mikroorganismen verstanden, insbesondere der Mikroorganismen, deren Zahl im erfindungsgemäßen Verfahren zur Herstellung eines konservierten flüssigen Produktes reduziert, insbesondere auf 0 reduziert, werden soll.

In besonders bevorzugter Ausführungsform ist die Keimzahl die Zahl der Mikroorganismen, insbesondere der Mikroorganismen, deren Zahl im erfindungsgemäßen Verfahren zur Herstellung eines konservierten flüssigen Produktes reduziert, insbesondere auf 0 reduziert, werden soll, insbesondere die Anzahl lebensfähiger Keime und von Sporen, insbesondere die Anzahl pathogener lebensfähigen Keime oder Sporen.

Im Zusammenhang mit der vorliegenden Erfindung wird bevorzugt unter einer Identifikation eines Mikroorganismus die Identität des Mikroorganismus verstanden.

Im Zusammenhang mit der vorliegenden Erfindung wird unter den Begriffen "umfassend" und "aufweisend" verstanden, dass zusätzlich zu den von diesen Begriffen explizit erfassten Elementen noch weitere, nicht explizit genannte Elemente hinzutreten können. Im Zusammenhang mit der vorliegenden Erfindung wird unter diesen Begriffen auch verstanden, dass allein die explizit genannten Elemente erfasst werden und keine weiteren Elemente vorliegen. In dieser besonderen Ausführungsform ist die Bedeutung der Begriffe "umfassend" und "aufweisend" gleichbedeutend mit dem Begriff "bestehend aus". Darüber hinaus erfassen die Begriffe "umfassend" und "aufweisend" auch Zusammensetzungen, die neben den explizit genannten Elementen auch weitere nicht genannte Elemente enthalten, die jedoch von funktionell und qualitativ untergeordneter Natur sind. In dieser Ausführungsform sind die Begriffe "umfassend" und "aufweisend" gleichbedeutend mit dem Begriff "im Wesentlichen bestehend aus".

Weitere vorteilhafte Ausgestaltungen ergeben sich aus den Unteransprüchen.

Die Erfindung wird nachstehend ohne Beschränkung des allgemeinen Erfindungsgedankens anhand von Figuren beschrieben.

### Dabei zeigt

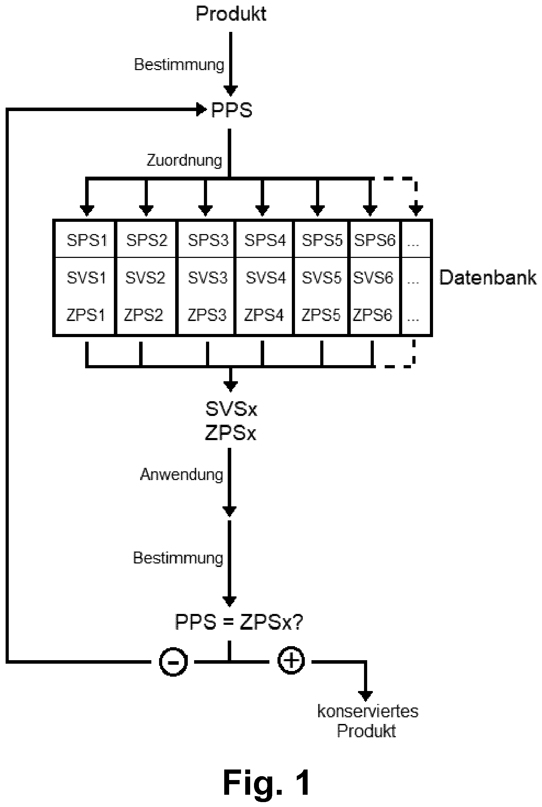

**Figur 1** schematisch das Verfahren zur kontinuierlichen Herstellung nicht-thermisch konservierter flüssiger Produkte gemäß der vorliegenden Erfindung.

Ausgehend von einem zu konservierenden Produkt (Orangensaft) erfolgt zunächst mittels geeigneter Messgeräte und Sensoren bei einem ersten Druckniveau, nämlich Atmosphärendruck, die Bestimmung eines spezifischen Produktparametersets (PPS). Das spezifische Produktparameterset (PPS) weist folgende Parameter auf:

| | |
|---|---|
| Typ: | Orangensaft |
| Dichte: | 1,045 |
| Viskosität: | 5,4 mPa^{*s} |
| Temperatur: | 40 °C |
| Trockensubstanzgehalt: | 12 g/100 g |
| pH: | 3,8 |
| Säuregehalt: | 5,8 g/L |
| Zuckergehalt: | 8,8 g/L |
| Keimgehalt an Saccharomyces cerevisiae: | 5,7 Millionen Zellen |

Das auf diese Weise bestimmte spezifische Produktparameterset (PPS) wird anschließend mit zahlreichen in einer Datenbank hinterlegten Standardproduktparametersets (SPS) verglichen und demjenigen Standardproduktparameterset (SPS) zugeordnet, das Übereinstimmung, oder wenn keine Übereinstimmung vorliegt, die geringste Abweichung mit dem spezifischen Produktparameterset (PPS) aufweist. Das in der Datenbank vorhandene SPS entspricht weitgehend dem vorstehend beschriebenen PPS, wobei der Trockensubstanzgehalt bei 10 g/100 g angegeben ist. Jedem der in der Datenbank hinterlegten Standardproduktparameterset (SPS) ist ein Standardverfahrensparameterset (SVS) und ein Zielproduktparameterset (ZPS) zugeordnet. Das Verfahrensparameterset (SVS) weist folgende Parameter auf:

| | |
|---|---|
| Initiale Temperatur des Orangensaftes: | 40 °C |
| Temperatur des Gas-Flüssigkeitsgemisch: | 40 °C |
| Gasdruck (zweites Druckniveau): | 470 bar |
| Gas: | N₂ |
| Gasfluss: | 55 ml/min |
| Flüssigkeitsfluss: | 5,5 ml/min |
| Gas/Flüssigkeitsverhältnis: | 10 |
| Retentionszeit des Gas-Flüssigkeitsgemisch: | 11,3 min |

Das Zielproduktparameterset (ZPS) entspricht dem vorstehend beschriebenen spezifischen Produktparameterset (PPS), wobei der Keimgehalt um mindestens 99,9 % reduziert sein soll.

Dabei bilden jeweils ein Standardproduktparameterset (SPS), ein Standardverfahrensparameterset (SVS) und ein Zielproduktparameterset (ZPS) eine zusammengehörige Gruppe, die definiert, durch Anwendung welcher Verfahrensparameter auf ein zu konservierendes Produkt mit bestimmten Standardproduktparametern reproduzierbar ein konserviertes Produkt mit bestimmten Zielproduktparametern erhalten werden kann. Die dem spezifischen Produktparameterset (PPS) über das Standardproduktparameterset (SPS) zugeordneten Verfahrensparameter des Standardverfahrensparametersets (SVS) werden auf das zu konservierende Produkt (Produkt) angewendet und, nach Entspannung bei einem ersten Druckniveau, ein weiteres spezifisches Produktparameterset (PPS) bestimmt. Der erhaltene End-Keimgehalt an Saccharomyces cerevisiae betrug 309000 Zellen.

Das weitere spezifische Produktparameterset entspricht also dem vorstehend beschriebenen Produktparameterset (PPS), wobei der Keimgehalt um 95 % reduziert wurde.

Sofern das weitere spezifische Produktparameterset (PPS) mit dem Zielproduktparameterset (ZPS) Übereinstimmung aufweist (+), so wurde durch die Anwendung der Verfahrensparameter des Standardverfahrensparametersets (SVS) ein konserviertes Produkt erhalten. Sofern das weitere spezifische Produktparameterset (PPS) mit dem Zielproduktparameterset (ZPS) keine Übereinstimmung aufweist (-), so wird dem weiteren spezifischen Produktparameterset (PPS) das Standardproduktparameterset (SPS) mit einem dazugehörigen vorbestimmten Standardverfahrensparameterset und einem Zielproduktparameterset aus der Datenbank zugeordnet, das die geringste Abweichung zu dem weiteren spezifischen Produktparameterset aufweist. Da das Zielproduktparameterset (ZPS) vorsieht, mindestens 99,9 % aller Keime abzutöten, wird dem erhaltenen weiteren spezifischen Produktparameterset ein in der Datenbank vorhandenes Standardverfahrensparameterset zugeordnet, das in diesem Fall dem vorstehend beschriebenen Standardverfahrensparameterset (SVS) entspricht und dieses Standardverfahrensparameterset ein weiteres Mal auf das Produkt angewendet, wobei anschließend ein spezifisches Produktparameterset erhalten wird, dessen Keimzahl dem gewünschten Wert des Zielproduktparametersets entspricht. Demgemäß werden die dem Standardproduktparameterset (SPS) zugehörigen Verfahrensparameter des Standardverfahrensparametersets (SVS) auf das zu konservierende Produkt, gegebenenfalls unter Wiederholung der Verfahrensschritte iv) bis vii), angewendet bis schließlich eine Übereinstimmung des spezifischen Produktparametersets (PPS) mit dem Zielproduktparameterset (ZPS) und somit ein konserviertes Produkt vorliegt.

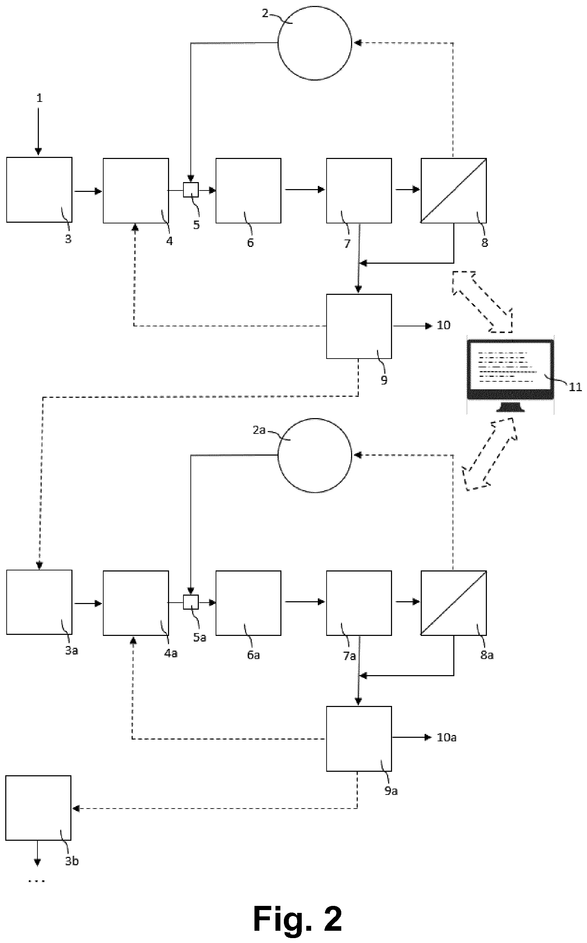

**Figur 2** schematisch die Behandlung eines zu konservierenden Produktes in einem typischen Druckwechselverfahren einschließlich Gasrückgewinnung.

Im dargestellten Verfahren wird in einem Schritt a) das zu konservierende Produkt über einen Zustrom (1) in einen Vorlagebehälter (3) bereitgestellt, unter ständigem Rühren gemischt und auf die gewünschte Verfahrenstemperatur gebracht. Das im Verfahren verwendete Prozessgas wird in einem Hochdruck-Gaskompressor (2) zum gewünschten Prozessdruck komprimiert. Gemäß Schritt b) wird eine Datenbank in einer programmierbaren Steuereinrichtung (11) bereitgestellt. Nach Bestimmung eines spezifischen Produktparametersets bei einem ersten Druckniveau gemäß Schritt c) und Zuordnung des in Schritt c) bestimmten spezifischen Produktparametersets zu einem in der bereitgestellten Datenbank hinterlegten Standardproduktparameterset und einem damit verknüpften Standardverfahrensparameterset gemäß Schritt d) wird das Produkt gemäß Schritt e) über eine Hochdruckpumpe (4) auf den in dem Standardverfahrensparameterset definierten Prozessdruck, das heißt das zweite Druckniveau, gebracht und mit dem komprimierten Prozessgas in einer Mischeinheit (5) kontinuierlich vermischt. In einem Verweilzeitmodul (6) wird das Gas/Flüssig-Gemisch bei definierter Prozesstemperatur und definiertem Prozessdruck, das heißt bei dem zweiten Druckniveau, für eine definierte Zeit (Haltezeit) gehalten. Im Anschluss wird das Produkt schlagartig in ein Separationsmodul (7) entspannt, in dem die Trennung der Gas- und Flüssig-Phasen stattfindet. Das separierte Prozessgas kann über eine Reinigungseinheit (8) gereinigt und nach Komprimierung mittels des Hochdruck-Gaskompressors (2) erneut verwendet werden. Die mit dem Gas abgeschiedenen Aromen und/oder produkteigenen flüchtigen Substanzen (z.B. Ethanol in alkoholischen Getränken) können nach der Gasreinigung in den Produktbehälter (9) überführt werden. Die einzelnen Verfahrensschritte des in Figur 2 dargestellte Konservierungsverfahren werden über die programmierbare Steuereinrichtung (11) angesteuert und reguliert. Für das im Produktbehälter (9) gesammelte Produkt wird gemäß Schritt f) ein weiteres spezifisches Produktparameterset bestimmt. Sofern das weitere spezifische Produktparameterset gemäß Schritt g) mit dem in der Datenbank hinterlegten Zielproduktparameterset, das mit dem zugeordneten Standardproduktparameterset und dem Standardverfahrensparameterset verknüpft ist, übereinstimmt, wurde das konservierte Produkt erhalten. In diesem Fall wird das konservierte Produkt über einen Produktstrom (10) abgeführt. Bei Nicht-Übereinstimmung werden die Schritte d) bis g) wiederholt, gegebenenfalls mehrfach wiederholt. Dazu wird das Produkt aus dem Produktbehälter (9) entweder erneut über die Hochdruckpumpe (4) auf das zweite Druckniveau gebracht, das in dem Standardverfahrensparameterset hinterlegt ist, das in Schritt d) dem in Schritt f) bestimmten spezifischen Produktparameterset zugeordnet wurde, und die weiteren Verfahrensschritte angewendet (zyklische Verfahrensweise) oder das Produkt wird aus dem Produktbehälter (9) in einen Vorlagebehälter (3a) überführt, von dem ausgehend die weiteren Verfahrensschritte der nicht-thermischen Konservierung in einer parallel angeordneten Vorrichtung ablaufen (sequenzielle Verfahrensweise). Auch hierbei besteht für das Produkt in Produktbehälter (9a) für den Fall der Nicht-Übereinstimmung des in Schritt f) bestimmten weiteren spezifischen Produktparametersets mit dem in der Datenbank hinterlegten Zielproduktparameterset wiederum die Möglichkeit, das Produkt entweder zum erneuten Durchlaufen der Verfahrensschritte d) bis g) der Hochdruckpumpe (4a) zuzuführen oder das Produkt aus dem Produktbehälter (9a) in einen weiteren Vorlagebehälter (3b) zu überführen, von dem ausgehend die weiteren Verfahrensschritte der nicht-thermischen Konservierung in einer parallel angeordneten Vorrichtung ablaufen. Die Verfahrensschritte d) bis g) werden dabei so oft gemäß der zyklischen oder sequenziellen Verfahrensweise wiederholt, bis in Schritt g) eine Übereinstimmung des in Schritt f) bestimmten weiteren spezifischen Produktparametersets mit dem in der Datenbank hinterlegten Zielproduktparameterset erreicht ist. Das erhaltene konservierte Produkt wird anschließend über den Produktstrom (10, 10a, ...) abgeführt.

## Patentansprüche

1. Verfahren zur kontinuierlichen Herstellung konservierter flüssiger Produkte umfassend die Schritte:
a) Bereitstellen eines zu konservierenden flüssigen Produktes,
b) Bereitstellen einer Datenbank, umfassend eine Vielzahl von Standardproduktparametersets zu physikalisch-chemischen und mikrobiologischen Eigenschaften flüssiger Standardprodukte, wobei jeweils ein Standardproduktparameterset mit einem dazugehörigen vorbestimmten Standardverfahrensparameterset und einem Zielproduktparameterset verknüpft ist,
c) Bestimmen eines spezifischen Produktparametersets des bereitgestellten flüssigen Produktes durch Messen der physikalisch-chemischen und mikrobiologischen Eigenschaften des flüssigen Produktes bei einem ersten Druckniveau,
d) Zuordnen des in Schritt c) bestimmten spezifischen Produktparametersets zu einem in der gemäß Schritt b) bereitgestellten Datenbank enthaltenen Standardverfahrensparameterset,
e) Anwenden der Verfahrensparameter des in Schritt d) zugeordneten Standardverfahrensparametersets auf das bereitgestellte flüssige Produkt bei einem zweiten Druckniveau,
f) Bestimmen eines weiteren spezifischen Produktparametersets des in Schritt e) erhaltenen flüssigen Produktes durch Messen der physikalisch-chemischen und mikrobiologischen Eigenschaften des flüssigen Produktes bei dem ersten Druckniveau,
g) Vergleichen des in Schritt f) bestimmten weiteren spezifischen Produktparametersets mit dem Zielproduktparameterset, wobei bei deren Übereinstimmung das flüssige konservierte Produkt erhalten wird, wobei bei Nicht-Übereinstimmung des weiteren spezifischen Produktparametersets mit dem Zielproduktparameterset die Schritte d) bis g) wiederholt werden bis deren Übereinstimmung erreicht wird, und wobei jeweils in Schritt d) dem jeweils in Schritt f) bestimmten jeweils weiteren spezifischen Produktparameterset ein zugehöriges in der gemäß Schritt b) bereitgestellten Datenbank enthaltenes Standardverfahrensparameterset zugeordnet wird.

2. Verfahren nach Anspruch 1, wobei das erste Druckniveau atmosphärischer Druck ist.

3. Verfahren nach einem der vorangehenden Ansprüche, wobei ein Standardverfahrensparameterset die Höhe des Drucks des zweiten Druckniveaus, Temperatur, Art des Prozessgases, Haltezeit, Gas-/Flüssigkeitsverhältnis und Druckentlastung umfasst.

4. Verfahren nach einem der vorangehenden Ansprüche, wobei die physikalisch-chemischen Eigenschaften des flüssigen Produktes in dem Produktparameterset die quantitative und qualitative chemische Zusammensetzung, enzymatische Aktivität, Dichte, Partikelgröße, rheologische Eigenschaften, Trockensubstanzgehalt, Viskosität, Molalität, pH-Wert, Ionenstärke und/oder Leitfähigkeit umfassen.

5. Verfahren nach einem der vorangehenden Ansprüche, wobei die mikrobiologischen Eigenschaften des flüssigen Produktes in dem Produktparameterset die Keimzahl, die Identifikation der Mikroorganismen, die Pathogenität, die Lebensfähigkeits- und/oder den Entwicklungszustand der Mikroorganismen, umfassen.

6. Verfahren nach einem der vorangehenden Ansprüche, wobei das flüssige Produkt ein biogenes Produkt ist.

7. Verfahren nach einem der vorangehenden Ansprüche, wobei in Schritt e) das Anwenden des in Schritt d) zugeordneten Standardverfahrensparametersets auf das bereitgestellte flüssige Produkt bei einem zweiten Druckniveau im Rahmen eines Druckwechselverfahrens, bevorzugt eines kontinuierlichen Druckwechselverfahrens, erfolgt.

8. Verfahren nach einem der vorhergehenden Ansprüche, wobei das Verfahren ein selbstlernendes Verfahren ist.

9. Verfahren nach einem der vorangehenden Ansprüche, wobei das Bestimmen eines spezifischen Produktparametersets in den Schritten c) und f), mittels Ultraschall-gestützter Methoden, biochemischer Methoden, immunologischer Methoden, molekularbiologischer Methoden, rheologischer Methoden, viskositätsmessender Methoden, optischer Methoden, spektroskopischer Methoden, chromatographischer Methoden oder elektroanalytischer Methoden, insbesondere mittels Photometrie, Kalorimetrie, Polarimetrie, Atomabsorptions-, Mikrowellen-, IR-, Nah-IR-, Raman-, UV-, NMR-, ESR-Spektroskopie, Flammenphotometrie, Röntgenfluoreszenz, ICP-MS, Röntgen-, Elektronen- und/oder Neutronenbeugung, erfolgt.

10. Computerprogrammprodukt, welches direkt in einen Speicher einer programmierbaren Steuereinrichtung einer Vorrichtung zur kontinuierlichen, vorzugsweise nicht-thermischen, Konservierung flüssiger Produkte ladbar ist, umfassend eine Datenbank und Programmcodemittel zur Durchführung des Verfahrens zur kontinuierlichen Herstellung, vorzugsweise nicht-thermisch, konservierter flüssiger Produkte gemäß der Ansprüche 1 bis 9 umfassend die Schritte a) bis g).

11. Computerlesbarer Datenträger, umfassend ein Computerprogrammprodukt gemäß Anspruch 10.

12. Vorrichtung zur Durchführung des Verfahrens zur kontinuierlichen Herstellung, vorzugsweise nicht-thermisch, konservierter flüssiger Produkte gemäß einem der Ansprüche 1 bis 9, umfassend mindestens ein Gefäß (2, 5, 6, 8), mindestens eine Messeinrichtung, und mindestens eine programmierbare Steuereinrichtung mit einem Computerprogrammprodukt gemäß Anspruch 10.

## Claims

1. A method for continuous production of preserved liquid products comprising the steps of
a) providing a liquid product to be preserved,
b) providing a database comprising a plurality of standard product parameter sets for physico-chemical and microbiological properties of liquid standard products, wherein each standard product parameter set is linked to an associated predetermined standard method parameter set and a target product parameter set,
c) determining a specific product parameter set of the provided liquid product by measuring the physico-chemical and microbiological properties of the liquid product at a first pressure level,
d) assigning the specific product parameter set determined in step c) to a standard method parameter set contained in the database provided according to step b),
e) applying the method parameters of the standard method parameter set assigned in step d) to the provided liquid product at a second pressure level,
f) determining a further specific product parameter set of the liquid product obtained in step e) by measuring the physico-chemical and microbiological properties of the liquid product at the first pressure level,
g) comparing the further specific product parameter set determined in step f) with the target product parameter set, wherein if they match, the preserved liquid product is obtained, wherein if the further specific product parameter set does not match the target product parameter set, steps d) to g) are repeated until their match is achieved, and wherein in each case a standard method parameter set contained in the database provided according to step b) is assigned in step d) to the further specific product parameter set determined in each case in step f).

2. The method according to claim 1, wherein the first pressure level is atmospheric pressure.

3. The method according to any one of the preceding claims, wherein a standard method parameter set comprises the amount of pressure of the second pressure level, temperature, type of process gas, holding time, gas/liquid ratio and depressurisation.

4. The method according to any one of the preceding claims, wherein the physico-chemical properties of the liquid product in the product parameter set comprise quantitative and qualitative chemical composition, enzymatic activity, density, particle size, rheological properties, dry matter content, viscosity, molality, pH, ionic strength and/or conductivity.

5. The method according to any one of the preceding claims, wherein the microbiological properties of the liquid product in the product parameter set comprise the microbial count, the identification of the microorganisms, the pathogenicity, the viability and/or the developmental status of the microorganisms.

6. The method according to any one of the preceding claims, wherein the liquid product is a biogenic product.

7. The method according to any one of the preceding claims, wherein in step e) the applying of the standard method parameter set assigned in step d) to the provided liquid product is carried out at a second pressure level as part of a pressure swing method, preferably a continuous pressure swing method.

8. The method according to one of the preceding claims, wherein the method is a self-learning method.

9. The method according to any one of the preceding claims, wherein the determining of a specific product parameter set in steps c) and f) is carried out by means of ultrasound-based methods, biochemical methods, immunological methods, molecular biological methods, rheological methods, viscosity-measuring methods, optical methods, spectroscopic methods, chromatographic methods or electroanalytical methods, in particular by means of photometry, calorimetry, polarimetry, atomic absorption spectroscopy, microwave spectroscopy, IR spectroscopy, near-IR, Raman spectroscopy, UV spectroscopy, NMR spectroscopy, ESR spectroscopy, flame photometry, X-ray fluorescence, ICP-MS, X-ray diffraction, electron diffraction and/or neutron diffraction.

10. A computer program product which is loadable directly into a memory of a programmable control system of a device for continuous, preferably non-thermal, preservation of liquid products, comprising a database and program code means for conducting the method for continuous production of, preferably non-thermal, preserved liquid products according to claims 1 to 9, comprising steps a) to g).

11. A computer readable data carrier comprising a computer program product according to claim 10.

12. A device for conducting the method for continuous production of, preferably non-thermally, preserved liquid products according to any one of claims 1 to 9, comprising at least one vessel (2, 5, 6, 8), at least one measuring system, and at least one programmable control system with a computer program product according to claim 10.

## Revendications

1. Un procédé de production en continu de produits liquides conservés, comprenant les étapes suivantes
a) fournir un produit liquide à conserver,
b) fournir une base de données comprenant une pluralité de sets de paramètres de produit standard pour les propriétés physico-chimiques et microbiologiques des produits standard liquides, dans laquelle chaque set de paramètres de produit standard est lié à un set de paramètres de procédé standard prédéterminé associé et à un set de paramètres de produit cible,
c) déterminer un set de paramètres de produit spécifique du produit liquide fourni en mesurant les propriétés physico-chimiques et microbiologiques du produit liquide à un premier niveau de pression,
d) attribuer le set de paramètres de produit spécifique déterminé à l'étape c) à un set de paramètres de procédé standard contenu dans la base de données fournie à l'étape b),
e) appliquer les paramètres de procédé du set de paramètres de procédé standard attribué à l'étape d) au produit liquide fourni à un second niveau de pression,
f) déterminer un autre set de paramètres de produit spécifique de produit liquide obtenu à l'étape e) en mesurant les propriétés physico-chimiques et microbiologiques du produit liquide au premier niveau de pression,
g) comparer l'autre set de paramètres de produit spécifique déterminé à l'étape f) avec le set de paramètres de produit cible, dans lequel, s'ils correspondent, le produit liquide conservé est obtenu, dans lequel, si l'autre set de paramètres de produit spécifique ne correspond pas au set de paramètres de produit cible, les étapes d) à g) sont répétées jusqu'à ce que leur correspondance soit atteinte, et dans lequel, dans chaque cas, un set de paramètres de procédé standard contenu dans la base de données fournie selon l'étape b) est attribué à l'étape d) au set de paramètres de produit standard déterminé dans chaque cas à l'étape f).

2. Le procédé selon la revendication 1, dans lequel le premier niveau de pression est la pression atmosphérique.

3. Le procédé selon l'une quelconque des revendications précédentes, dans lequel un set de paramètres de procédé standard comprend la quantité de pression du deuxième niveau de pression, la température, le type de gaz de processus, le temps de maintien, le rapport gaz/liquide et la dépressurisation.

4. Le procédé selon l'une quelconque des revendications précédentes, dans lequel les propriétés physico-chimiques du produit liquide dans le set de paramètres de produit comprennent la composition chimique quantitative et qualitative, l'activité enzymatique, la densité, la taille des particules, les propriétés rhéologiques, la teneur en matière sèche, la viscosité, la molalité, le pH, la force ionique et/ou la conductivité.

5. Le procédé selon l'une quelconque des revendications précédentes, dans lequel les propriétés microbiologiques du produit liquide dans le set de paramètres de produit comprennent la numération microbienne, l'identification des microorganismes, la pathogénicité, la viabilité et/ou l'état de développement des microorganismes.

6. Le procédé selon l'une quelconque des revendications précédentes, dans lequel le produit liquide est un produit biogène.

7. Le procédé selon l'une quelconque des revendications précédentes, dans lequel, à l'étape e), l'application du set de paramètres de procédé standard attribué à l'étape d) au produit liquide fourni est effectuée à un deuxième niveau de pression dans le cadre d'un procédé d'oscillation de pression, préférablement un procédé d'oscillation de pression en continu.

8. Le procédé selon l'une des revendications précédentes, dans lequel le procédé est un procédé d'auto-apprentissage.

9. Le procédé selon l'une des revendications précédentes, dans lequel la détermination d'un set de paramètres de produit spécifique aux étapes c) et f) est effectuée au moyen de méthodes basées sur les ultrasons, de méthodes biochimiques, de méthodes immunologiques, de méthodes de biologie moléculaire, de méthodes rhéologiques, de méthodes de mesure de la viscosité, des méthodes optiques, des méthodes spectroscopiques, des méthodes chromatographiques ou des méthodes électroanalytiques, en particulier au moyen de la photométrie, de la calorimétrie, de la polarimétrie, de la spectroscopie absorption atomique, de la spectroscopie micro-ondes, de la spectroscopie IR, de la spectroscopie proche IR, de la spectroscopie Raman, de la spectroscopie UV, de la spectroscopie RMN, de la spectroscopie ESR, de la photométrie de flamme, de la fluorescence des rayons X, de l'ICP-MS, de la diffraction des rayons X, de la diffraction des électrons et/ou de la diffraction des neutrons.

10. Un produit programme d'ordinateur qui est chargeable directement dans une mémoire d'un système de commande programmable d'un dispositif de conservation continue, préférablement non thermique, de produits liquides, comprenant une base de données et des moyens de code de programme pour réaliser le procédé de production en continu de produits liquides, préférablement non thermique, conservés selon les revendications 1 à 9, comprenant les étapes a) à g).

11. Un support de données lisible par ordinateur comprenant un produit programme d'ordinateur selon la revendication 10.

12. Un dispositif pour réaliser le procédé de production en continu de produits liquides, préférablement non thermique, conservés selon l'une quelconque des revendications 1 à 9, comprenant au moins une cuve (2, 5, 6, 8), au moins un système de mesure, et au moins un système de commande programmable avec un produit programme d'ordinateur selon la revendication 10.
